# EUROPEAN PATENT APPLICATION

(11) **EP 4 745 736 A1**
(43) Date of publication of application: **20.05.2026**
(21) Application number: 24884146.2
(22) Date of filing: 16.08.2024
(51) Int. Cl.: G06F 3/0481

(54) **SCREEN RECOGNITION METHOD AND ELECTRONIC DEVICE**

(30) Priority: 03.11.2023 CN 202311461131; 26.12.2023 CN 202311821050
(71) Applicant: Honor Device Co., Ltd., Shenzhen, Guangdong 518040 (CN)
(72) Inventor: DING, Yiyan, Shenzhen, Guangdong 518040 (CN); HUANG, Liwei, Shenzhen, Guangdong 518040 (CN); QIAN, Kai, Shenzhen, Guangdong 518040 (CN); XU, Chaojin, Shenzhen, Guangdong 518040 (CN); HAN, Jia, Shenzhen, Guangdong 518040 (CN)
(74) Representative: Henselmann, Alexander Gerhard
(86) International application number: PCT/CN2024/112875
(87) International publication number: WO 2025/092139

(57) **Abstract**

A screen recognition method and an electronic device are provided, and the field of terminal technologies is related to. A matching text entity can be marked based on an item entity included in a user interface, to provide a user with a mark for quickly obtaining information from the user interface, thereby helping improve efficiency of human-computer interaction. The method includes: A first interface is displayed. The first interface includes a first item entity, a first text entity, and a second text entity. In response to a first trigger operation on the first interface, a first text mark is added to the first text entity, and no mark is added to the second text entity. A second interface is displayed. The second interface includes a second item entity, a third text entity, and a fourth text entity. In response to a second trigger operation on the second interface, a second text mark is added to the third text entity, and no mark is added to the fourth text entity.

## Description

This application claims priority to Chinese Patent Application No. 202311461131.5, filed with the China National Intellectual Property Administration on November 3, 2023 and entitled "INTELLIGENT RECOGNITION METHOD AND ELECTRONIC DEVICE", which is incorporated herein by reference in its entirety.

This application claims priority to Chinese Patent Application No. 202311821050.1, filed with the China National Intellectual Property Administration on December 26, 2023 and entitled "SCREEN RECOGNITION METHOD AND ELECTRONIC DEVICE", which is incorporated herein by reference in its entirety.

### TECHNICAL FIELD

Embodiments of this application relate to the field of terminal technologies, and in particular, to a screen recognition method and an electronic device.

### BACKGROUND

During daily use of an electronic device such as a mobile phone or a tablet computer, the mobile phone may be required to recognize content in a user interface, for example, recognize a commodity, a text, or the like in the user interface.

In the related art, although there are some solutions for recognizing content in a user interface, for example, recognizing a text in a user interface by using an optical character recognition (Optical Character Recognition, OCR) technology, a recognition result cannot be presented well, which consequently, cannot help a user efficiently obtain information.

### SUMMARY

This application provides a screen recognition method and an electronic device. Content in a user interface is recognized, and a function matching the interface is recommended based on a recognition result, so that a user can perform corresponding processing on the content in the user interface, thereby improving efficiency of human-computer interaction.

To achieve the foregoing objective, the following technical solutions are adopted in embodiments of this application:

According to a first aspect, this application provides a screen recognition method, applied to an electronic device. A first interface is displayed. The first interface includes a first item entity, a first text entity, and a second text entity. In response to a first trigger operation on the first interface, a first text mark is added to the first text entity, and no mark is added to the second text entity. A second interface is displayed. The second interface includes a second item entity, a third text entity, and a fourth text entity. In response to a second trigger operation on the second interface, a second text mark is added to the third text entity, and no mark is added to the fourth text entity.

The first item entity and the second item entity have different entity categories. For example, the first item entity is a building, and the second item entity is an animal. That is, item entities of different entity categories are included in the first interface and the second interface. The first text entity and the fourth text entity have a same entity category, for example, the first text entity and the fourth text entity are both phone numbers. The second text entity and the third text entity have a same entity category, for example, the second text entity and the third text entity are both addresses. The first text entity and the second text entity have different entity categories. That is, text entities of not all entity categories are marked. In addition, text entities of a same entity category are marked in neither of the first interface and the second interface.

In conclusion, by using this application, in an interface having an item entity of a specific category (the entity category of the first item entity), the electronic device may mark text entities of a first category (the entity category of the first text entity and the fourth text entity), but not mark text entities of a second category (the entity category of the second text entity and the third text entity). Moreover, in an interface having an item entity of another category (the entity category of the second item entity), the electronic device may mark text entities of the second category, but not mark text entities of the first category. In view of the above, the electronic device can mark a matching text entity based on an item entity included in a user interface, to provide a user with a mark for quickly obtaining information from the user interface, thereby helping improve efficiency of human-computer interaction.

In a possible design manner of the first aspect, an entity category of a text entity includes at least two of the following: an address, a phone number, flight information, an express number, an e-mail address, a website link, a certificate number for identity recognition, and a graphic code. An entity category of an item entity includes at least two of the following: an animal, a plant, a building, and food.

That is, the electronic device can mark a text entity matching an animal, a plant, a building, and food in the user interface.

In a possible design manner of the first aspect, the first text mark indicates the entity category of the first text entity. For example, the first text mark is a category icon of the entity category. For example, if the first text entity is a phone number, the first mark may be a phone icon.

Alternatively, the first text entity is associated with a plurality of services. Using an example in which the first text entity is a phone number, the phone number may be associated with a plurality of services such as making a call and adding to contacts. The first text mark may indicate a first service in which the user is most interested in a plurality of services. For example, the first text mark is a service icon of the first service. The electronic device may regard a service that is selected most times by a user in text entities of the first category as a first service in which the user is most interested. The first category is an entity category of the first text entity. In this way, the electronic device may mark a text entity with a mark (such as a service icon) corresponding to a service in which the user is interested.

It should be understood that for specific content of the second text mark, reference may also be made to the first text entity. Details are not described herein again.

In a possible design manner of the first aspect, after that, in response to the first trigger operation on the first interface, the first text mark is added to the first text entity, the method further includes: A third interface is displayed in response to a third trigger operation on the first text entity or the first text mark. The third interface includes a plurality of service options, and the plurality of service options are in a one-to-one correspondence with the plurality of services. A service option of the first service is displayed in a first place among the plurality of service options.

That is, the electronic device ranks an option of the first service in which the user is most interested in a first place among the plurality of service options, so that a user can use the first service through the option of the first service. Certainly, the electronic device may also respond to other unmarked text entities of the first category in the same way, that is, display the service option of the first service in a first place.

It should be understood that in response to the third trigger operation on the third text entity or the second text mark, the electronic device responds in the same way, and details are not described herein again.

In a possible design manner of the first aspect, the first interface further includes a fifth text entity. The method further includes: A third text mark is added to the fifth text entity in response to the first trigger operation on the first interface and that an entity category of the fifth text entity is different from the entity category of the first text entity. No mark is added to the fifth text entity if the entity categories of the fifth text entity and the first text entity are the same.

That is, for text entities of a same entity category, the electronic device displays a mark for only one of the text entities, to avoid repeated marking of the text entities of the same entity category.

In a possible design manner of the first aspect, the first interface further includes a sixth text entity. The method further includes: A fourth text mark is added to the sixth text entity in response to the first trigger operation on the first interface and that the fourth entity mark of the sixth text entity does not block the first text mark. No mark is added to the sixth text entity if the fourth text mark blocks the first text mark.

That is, the electronic device displays all the marks only when the marks do not block each other.

In a possible design manner of the first aspect, the first interface further includes a third item entity. The method further includes: In response to the first trigger operation on the first interface, the first item entity is highlighted, and a first shortcut entry is displayed around the first item entity. In response to a fourth trigger operation on the third item entity, the third item entity is highlighted, and a second shortcut entry is displayed around the first item entity. The highlighted item entity may be understood as a focus item entity.

That is, in response to a trigger operation performed by a user, the electronic device may switch a focus item entity, and display a shortcut entry corresponding to the focus item entity, to help the user obtain information about the focus item entity.

In a possible design manner of the first aspect, that in response to the first trigger operation on the first interface, the first item entity is highlighted, and the first shortcut entry is displayed around the first item entity includes: In response to the first trigger operation on the first interface and that the first item entity satisfies a first condition, the first item entity is highlighted, and the first shortcut entry is displayed around the first item entity.

The first condition includes at least one of the following:
Condition 1: An area of the first item entity is larger than an area of the third item entity. For example, the first item entity is an item entity having a largest area in the first interface. That is, the electronic device may prioritize an item entity having a larger area as a focus item entity.
Condition 2: A blocked region of the first item entity is smaller than a blocked region of the third item entity. It may be understood that a smaller blocked region of the first item entity indicates that the first item entity has higher integrity and is displayed more comprehensively. That is, the electronic device may prioritize an item entity that can be displayed completely as a focus item entity.
Condition 3: A definition of an edge line of the first item entity is higher than a definition of an edge line of the third item entity. A higher definition of an edge of the first item entity indicates more accurate matting of the first item entity by the electronic device. That is, the electronic device may prioritize an item entity that is matted more accurately as a focus item entity.

At this point, it should be noted that a combination of the foregoing condition 1, condition 2, and condition 3, that is, an area of the first item entity is larger than an area of the third item entity, a blocked region of the first item entity is smaller than a blocked region of the third item entity, and a definition of an edge line of the first item entity is higher than a definition of an edge line of the third item entity, indicates that the first item entity has a larger area, higher integrity, and a clearer boundary. That is, the electronic device may prioritize an item entity that has a larger area, that is matted more accurately, and that is complete as a focus item entity.

In a possible design manner of the first aspect, the method further includes: A first item mark is displayed on the third item entity in response to the first trigger operation on the first interface. For example, the first item mark is a circle pattern. The fourth trigger operation includes a trigger operation on the first item mark. That is, the electronic device may use the first item mark as a clear trigger point.

In a possible design manner of the first aspect, when the first item entity is a focus item entity, the electronic device marks the first text entity. The method further includes: The third text mark is added to the second text entity in response to the fourth trigger operation on the third item entity.

That is, as a focus item entity is switched, a text entity marked by the electronic device is also switched, for example, switched from the first text entity to the second text entity. In this way, the electronic device can always ensure that a text entity matching a current focus item entity is marked.

In a possible design manner of the first aspect, the method further includes: A fourth interface is displayed in response to a move operation on a highlighted item entity. The fourth interface includes a plurality of associated entries. Each associated entry corresponds to one application or one service. The plurality of associated entries include a first associated entry. The first associated entry corresponds to a first application or a second service. That is, for the focus item entity, the electronic device may provide an associated entry quickly. The electronic device displays a fifth interface in response to moving the highlighted item entity to the first associated entry. The fifth interface is an interface of the first application or the second service. The fifth interface includes associated information of the highlighted item entity. That is, a user only needs to move a focus item entity to the first association, and the electronic device may present associated information of the focus item entity in the first application or the second service.

In this way, operations performed by a user can be simplified, and the user does not need to exit from a current user interface, such as the first interface, first and enter a desktop, then enter an interface of the first application or the second service, and finally search the interface of the first application or the second service for a focus item entity, thereby improving efficiency of human-computer interaction.

In a possible design manner of the first aspect, that the fourth interface is displayed in response to the move operation on the highlighted item entity includes: A position of the highlighted item entity in the first interface is moved in response to the move operation on the highlighted item entity. The fourth interface is displayed in response to that the position of the highlighted item entity moves into a target region in the first interface.

That is, only after a focus item entity moves to the target region, the electronic device determines that there is a requirement for providing an associated entry, thereby improving accuracy of an occasion of providing an associated entry.

In a possible design manner of the first aspect, the highlighted item entity is the first item entity, and the plurality of associated entries include a second associated entry. The highlighted item entity is the third item entity, and the plurality of associated entries include a third associated entry. The second associated entry is different from the third associated entry.

That is, for different focus item entities, associated entries provided by the electronic device may be different, to improve pertinence of the provided associated entries.

In a possible design manner of the first aspect, the first interface is a viewfinder interface of a camera, and the first trigger operation includes a photographing operation. That is, through a photographing operation, the electronic device may be triggered to recognize and mark a text entity in the interface.

In a possible design manner of the first aspect, before that, in response to the first trigger operation on the first interface, the first text mark is added to the first text entity, the method further includes: A recognition control is displayed in the first interface when the first interface satisfies a second condition. The second condition includes: the first interface is a non-blank interface, the first interface includes a text entity and/or an item entity, and the first trigger operation includes a trigger operation on the recognition control. That is, when the first interface includes useful information such as a text or an item, the electronic device actively pushes a recognition control, configured to recognize and mark a text entity in the first interface. In this way, the electronic device can intelligently push a text entity recognizing and marking function (such as an intelligent recognition function below).

In a possible design manner of the first aspect, that the recognition control is displayed in the first interface when the first interface satisfies the second condition includes: When the first interface satisfies the second condition, the recognition control is displayed in the first interface in response to a fifth trigger operation (such as a two-finger press operation) performed by the user on the first interface. If a user performs the fifth operation on the first interface, it indicates that the user wants to recognize and mark a text entity.

That is, the electronic device may push a text entity recognizing and marking function only when the first interface includes useful information such as a text or an item and the user wants to recognize and mark the text entity, to accurately satisfy a requirement of the user.

In a possible design manner of the first aspect, the method further includes:

In response to the fifth trigger operation performed by the user on the first interface, where the fifth trigger operation is for triggering the electronic device to analyze content of the first interface to determine a to-be-recommended function in the first interface, several types of typical content and their matching functions are shown below:

A translation control is displayed in the first interface when a quantity of foreign words in the first interface exceeds a first quantity. When the quantity of foreign words in the first interface does not exceed the first quantity, the translation control is not displayed, and the translation control is configured to trigger the electronic device to translate the foreign words in the first interface. In this way, the electronic device may recommend a translation function for an interface with many foreign words, to help translate the foreign words in the interface.

A privacy protection control is displayed in the first interface when the first interface includes privacy information. When the first interface does not include privacy information, the privacy protection control is not displayed, and the privacy protection control is configured to trigger the electronic device to block the privacy information in the first interface. In this way, the electronic device may recommend a privacy protection function for an interface including privacy, to protect privacy information in the interface.

A selection control is displayed in the first interface when the first interface includes a text, but does not include an entity. When the first interface does not include a text or includes an entity, the selection control is not displayed, and the selection control is configured to trigger the electronic device to select a text in the first interface. In this way, the electronic device may recommend a text selection function for an interface including an ordinary text, to help perform operations, such as copying and cutting, on the text in the interface.

In all the foregoing descriptions of possible design manners of the first aspect, the first interface is mainly used for description. It may be understood that, in various possible design manners, a specific implementation of a second aspect is similar to that of the first interface, and details are not described herein again.

According to a second aspect, this application further provides an electronic device. The electronic device includes a display screen, a memory, and one or more processors. The display, the memory, and the processor are coupled. The memory is configured to store computer program code. The computer program code includes computer instructions. When the computer instructions are executed by the processor, the electronic device is enabled to perform the method in the first aspect and any possible design thereof.

According to a third aspect, this application provides a chip system. The chip system is applied to an electronic device including a display screen and a memory. The chip system includes one or more interface circuits and one or more processors. The interface circuit and the processor are interconnected by a line. The interface circuit is configured to receive a signal from a memory of the electronic device and send the signal to the processor, where the signal includes computer instructions stored in the memory. When the processor executes the computer instructions, the electronic device performs the method according to the first aspect and any possible design manner thereof.

According to a fourth aspect, this application provides a computer storage medium, where the computer storage medium includes computer instructions, and when the computer instructions are run on an electronic device, the electronic device is enabled to perform the method according to the first aspect and any possible design manner thereof.

According to a fifth aspect, this application provides a computer program product. When the computer program product is run on a computer, the computer is enabled to perform the method according to according to the first aspect and any possible design manner thereof.

It may be understood that, for beneficial effects that can be achieved by the electronic device according to the second aspect, the chip system according to the third aspect, the computer storage medium according to the fourth aspect, and the computer program product according to the fifth aspect, refer to the beneficial effects according to according to the first aspect and any possible design manner thereof. Details are not described herein again.

### BRIEF DESCRIPTION OF DRAWINGS

FIG. 1 is a diagram of a hardware structure of an electronic device according to an embodiment of this application;
FIG. 2A and FIG. 2B are a diagram 1 of an interface of a mobile phone according to an embodiment of this application;
FIG. 3 is a diagram 2 of an interface of a mobile phone according to an embodiment of this application;
FIG. 4 is a diagram 3 of an interface of a mobile phone according to an embodiment of this application;
FIG. 5 is a diagram 4 of an interface of a mobile phone according to an embodiment of this application;
FIG. 6 is a diagram 5 of an interface of a mobile phone according to an embodiment of this application;
FIG. 7 is a diagram 6 of an interface of a mobile phone according to an embodiment of this application;
FIG. 8 is a diagram 7 of an interface of a mobile phone according to an embodiment of this application;
FIG. 9A is a diagram 8 of an interface of a mobile phone according to an embodiment of this application;
FIG. 9B is a diagram 9 of an interface of a mobile phone according to an embodiment of this application;
FIG. 10 is a diagram 10 of an interface of a mobile phone according to an embodiment of this application;
FIG. 11 is a diagram 11 of an interface of a mobile phone according to an embodiment of this application;
FIG. 12 is a diagram 12 of an interface of a mobile phone according to an embodiment of this application;
FIG. 13A and FIG. 13B are a diagram 13 of an interface of a mobile phone according to an embodiment of this application;
FIG. 14 is a diagram 14 of an interface of a mobile phone according to an embodiment of this application;
FIG. 15 is a diagram 15 of an interface of a mobile phone according to an embodiment of this application;
FIG. 16 is a diagram 16 of an interface of a mobile phone according to an embodiment of this application;
FIG. 17A and FIG. 17B are a diagram 17 of an interface of a mobile phone according to an embodiment of this application; and
FIG. 18 is a diagram 18 of an interface of a mobile phone according to an embodiment of this application;

### DESCRIPTION OF EMBODIMENTS

The following describes technical solutions in embodiments of this application with reference to the accompanying drawings in the embodiments of this application. In descriptions of the embodiments of this application, terms used in the following embodiments are only intended to describe particular embodiments, and are not intended to limit this application. As used in the specification and the claims of this application, a singular expression "a/an", "the", "foregoing", "the", or "this" is intended to include an expression "one or more", unless clearly indicated to the contrary in the context. It should be further understood that, in the following embodiments of this application, "at least one" and "one or more" mean one, two or more than two. The term "and/or" is used to describe an association relationship between associated objects, indicating that there are three types of relationships. For example, A and/or B may represent: only A exists, both A and B exist, and only B exists, where A and B may be singular or plural. The character "/" generally indicates an "or" relationship between associated objects.

Reference to "an embodiment", "some embodiments", or the like described in the specification indicates that one or more embodiments of this application include a specific feature, structure, or characteristic described with reference to those embodiments. Therefore, the statements "in one embodiment", "in some embodiments", "in some other embodiments", "in other embodiments", and the like in the differences in this specification do not necessarily refer to the same embodiment, but mean "one or more but not all embodiments", unless otherwise specially emphasized in other ways. The terms "include", "comprise", "have" and their variations mean "including but not limited to", unless otherwise specifically emphasized in another way. The term "connection" includes a direct connection and an indirect connection, unless otherwise specified. "First" and "second" are used for descriptive purposes only and should not be construed as indicating or implying relative importance or implicitly indicating the number of technical features indicated.

In embodiments of this application, words such as "an example" or "for example" are used to represent giving an example, an illustration, or a description. Any embodiment or design solution described by using "example" or "for example" in embodiments of this application should not be explained as being more preferred or having more advantages than another embodiment or design solution. Exactly, use of the term "example", "for example", or the like is intended to present a relative concept in a specific manner.

In a screen recognition method provided in embodiments of this application, an electronic device can recognize content, such as a text, an item, and a graphic code (including a barcode, a two-dimensional barcode, and the like), in a user interface, mark partial content in the user interface based on a recognition result, to provide a user with a mark for quickly obtaining information from the user interface, thereby helping improve efficiency of human-computer interaction.

Using an example in which a picture is displayed in the user interface, the electronic device can recognize a text, an item, and a graphic code included in the picture, and mark some of the text and the graphic code in the picture based on the recognized item, for example, mark a text and a graphic code that are highly associated with the item.

For example, the foregoing electronic device may be a device with a camera, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. No special limitation is imposed on a specific form of the electronic device in embodiments of this application.

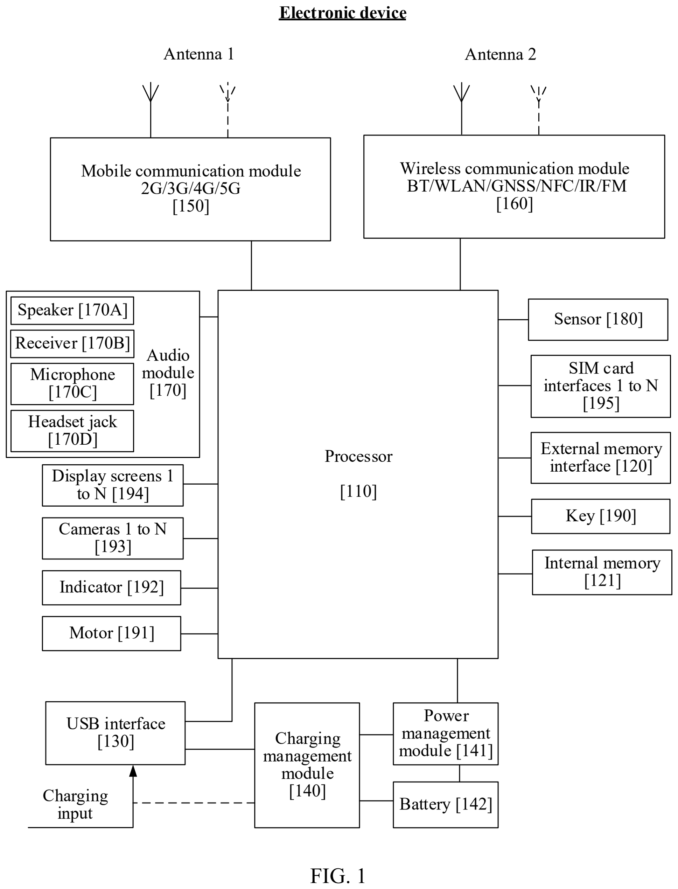

Referring to FIG. 1, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, and an audio module 170, a speaker 170A, a receiver 170B, a microphone 170C, a headset jack 170D, a sensor 180, a key 190, a motor 191, an indicator 192, a camera 193, a display screen 194, a subscriber identification module (subscriber identification module, SIM) card interface 195, and the like.

It may be understood that an example structure in this embodiment of the present invention does not constitute a specific limitation on the electronic device. In some other embodiments of this application, the electronic device may further include more or fewer components than those shown in the figure, some components may be combined, some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video encoder and decoder, a digital signal processor (digital signal processor, DSP), a baseband processor, and/or a neural-network processing unit (neural-network processing unit, NPU), and the like. Different processing units may be independent components, or may be integrated into one or more processors.

In some embodiments, the electronic device may implement the recognition method through the processor 110, to obtain a recognition result.

A wireless communication function of the electronic device may be implemented through the antenna 1, the antenna 2, the mobile communications module 150, the wireless communication module 160, the modem processor, the baseband processor, and the like.

The electronic device implements a display function through the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs, and the GPU executes program instructions to generate or change display information.

The display screen 194 is configured to display an image, a video, or the like. In some embodiments, the electronic device may display the recognition result through the display screen 194.

The electronic device may implement a photographing function through an ISP, a camera 193, a video codec, a GPU, a display screen 194, an application processor, or the like. In some embodiments, the electronic device may acquire an image through the camera 193, for recognition.

The electronic device may use the audio module 170, the speaker 170A, the receiver 170B, the microphone 170C, the headset jack 170D, the application processor, and the like, to implement an audio function, for example, music playback or recording.

The key 190 includes a power key, a volume key, or the like. The key 190 may be a mechanical key, or may be a touch key. The mobile phone may receive a key input, and generate a key signal input related to user setting and function control of the mobile phone. The motor 191 may generate a vibration prompt. The motor 191 may be configured to provide a vibration prompt for an incoming call, and may be further configured to provide touch vibration feedback. The indicator 192 may be an indicator light, and may be configured to indicate a charging state and a power change, or may be configured to indicate a message, a missed call, a notification, and the like. The SIM card interface 195 is configured to connect to a SIM card. The SIM card may be inserted into the SIM card interface 195 or removed from the SIM card interface 195, to come into contact with or be separated from the mobile phone.

A software system of the electronic device may use a layered architecture, an event-driven architecture, a microkernel architecture, a microservice architecture, or a cloud architecture. This is not specifically limited in embodiments of this application.

The screen recognition method provided in embodiments of this application may be implemented in the foregoing electronic device. The following describes the screen recognition method provided in embodiments of this application by using an example in which the electronic device is a mobile phone.

An application (application, APP) specifically configured to recognize content in a user interface is provided in the mobile phone, and is referred to as a smart vision APP in this specification. The smart vision APP may be a system-level APP. The user interface includes application interfaces of various applications, for example, a lock screen interface, a desktop, a gallery interface, a chat interface, and a video playback interface.

Particularly, the application interface further includes a viewfinder interface of a camera application. That is, the smart vision APP may be further configured to recognize viewfinder content.

The mobile phone can open the smart vision APP in a plurality of manners, as shown in Manner 1 to Manner 4 below.

### Manner 1: An interface of the mobile phone provides an opening entry to the smart vision APP.

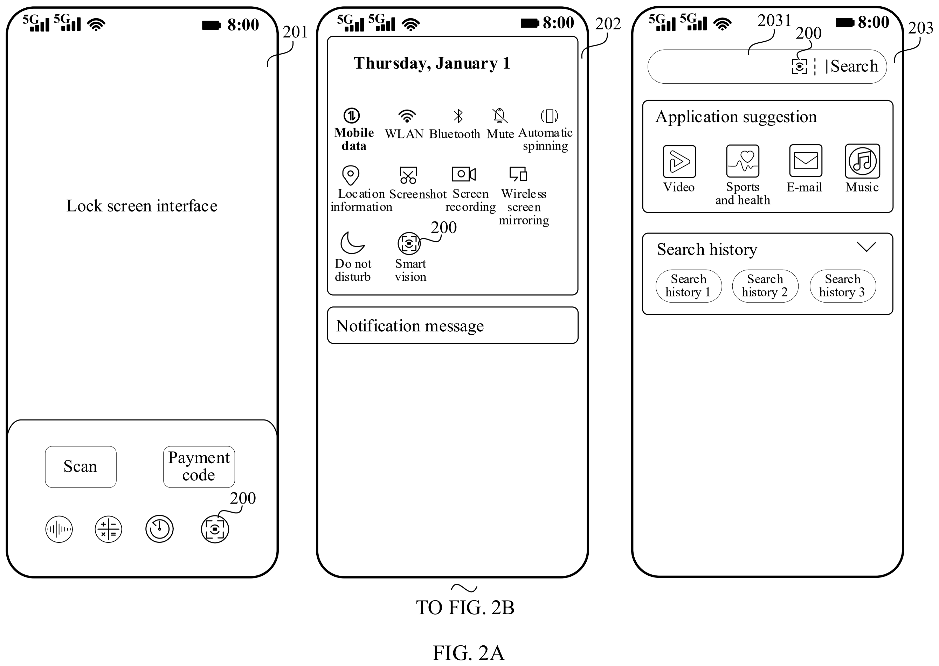

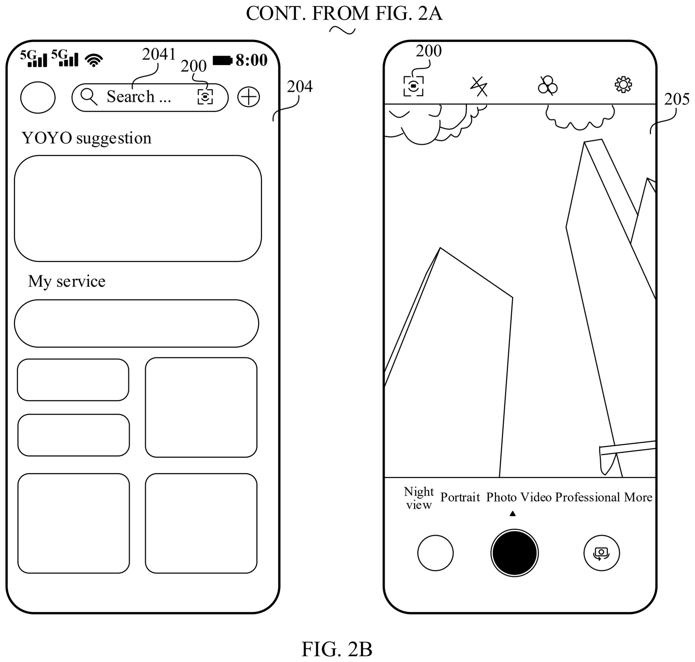

The mobile phone provides an opening entry to the smart vision APP. In response to a trigger operation, such as a tap operation, on the opening entry, the mobile phone can open the smart vision APP for recognition. A form and a position of the opening entry are not specifically limited in embodiments of this application. In this specification, only several position examples shown in FIG. 2A and FIG. 2B are listed below:

### Example 1: The opening entry is located in a lock screen interface.

On the lock screen interface of the mobile phone, in response to a pull-up operation performed by a user from the bottom of the lock screen interface, the mobile phone may display, in the lock screen interface, entries to various functions provided by the mobile phone. For example, in response to a pull-up operation, the mobile phone may display a lock screen interface 201 shown in FIG. 2A and FIG. 2B. The lock screen interface 201 includes entries to quick functions such as a recorder, a calculator, and a compass. In addition, the lock screen interface 201 further includes an opening entry 200 to the smart vision APP.

### Example 2: The opening entry is located in a pull-down control center.

When the screen of the mobile phone is on, in response to a pull-down operation performed by a user from the top of the display screen, the mobile phone may display a pull-down control center interface 202 shown in FIG. 2A and FIG. 2B. The pull-down control center interface 202 also includes entries to various quick functions provided by the mobile phone, including an opening entry 200 to the smart vision APP.

### Example 3: The opening entry is located in a global search interface.

When the mobile phone displays a desktop (including a main screen and a leftmost screen), in response to a slide-down operation performed by a user from the middle region of the desktop, the mobile phone may display a global search interface 203 shown in FIG. 2A and FIG. 2B. The global search interface 203 may be configured for searching the mobile phone for information. For example, the global search interface 203 includes a search box 2031. In response to an operation of inputting a search text by the user in the search box, the mobile phone may search the mobile phone for information including the search text, for example, a chat, a file, a short messaging service message, and an application. The search box 2031 includes an opening entry 200 to the smart vision APP.

### Example 4: The opening entry is located in a leftmost screen.

The mobile phone may display a leftmost screen 204 shown in FIG. 2A and FIG. 2B. The leftmost screen 204 includes a search box 2041, and the search box 2041 includes an opening entry 200 to the smart vision APP.

### Example 5: The opening entry is located in an application interface of a camera application.

After the mobile phone opens the camera application, the mobile phone may display an application interface 205 of the camera application shown in FIG. 2A and FIG. 2B. The application interface 205 includes an opening entry 200 to the smart vision APP.

### Manner 2: In response to voice wakeup, the mobile phone opens the smart vision APP.

A user may also trigger, through voice wakeup, the mobile phone to open the smart vision APP. Specifically, after a voice assistant of the mobile phone is woken up, in response to that the user inputs voice for opening the smart vision APP, the mobile phone can open the smart vision APP for recognition.

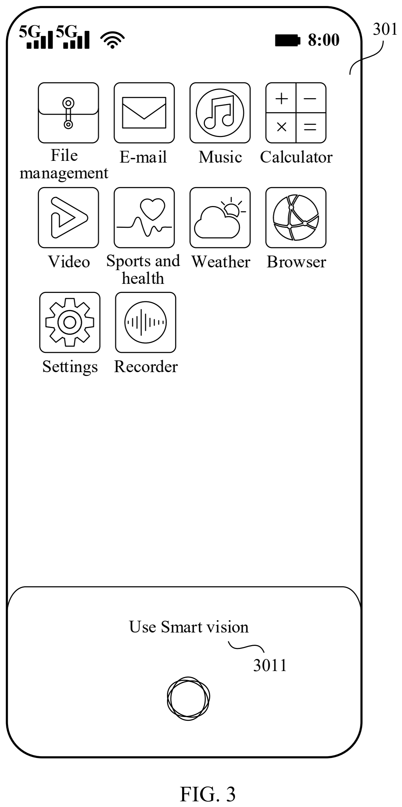

Using an example in which the voice that opens the smart vision APP is "Use the smart vision", after the user inputs the voice "Use the smart vision", the mobile phone can recognize "Use the smart vision" and display an interface 301 shown in FIG. 3. The interface 301 includes a voice result "Use the smart vision" 3011. Subsequently, the mobile phone can open the smart vision APP.

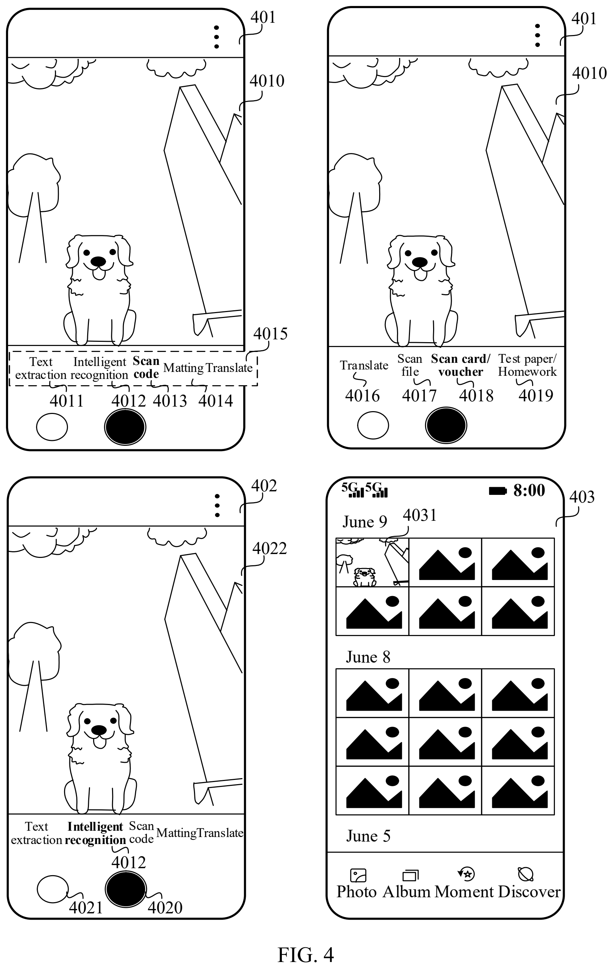

After opening the smart vision APP is triggered in Manner 1 or Manner 2 above, the mobile phone may display an application interface of the smart vision APP. For example, the mobile phone may display an interface 401 shown in FIG. 4. The interface 401 is an application interface of the smart vision APP. The interface 401 includes a viewfinder region 4010, configured for displaying a viewfinder picture of a camera.

Further, the smart vision APP provides a plurality of recognition functions. For example, the interface 401 shown in FIG. 4 includes functional options for a plurality of recognition functions, such as a "Text extraction" option 4011, an "Intelligent recognition" option 4012, a "Scan code" option 4013 (which is usually an option selected by default), and a "Matting" option 4014. In response to a slide operation performed by the user from right to left on a functional option region 4015 (indicated by a dashed-line box in the figure, where the dashed-line box actually does not exist), a "Translate" option 4016, a "Scan file" option 4017, a "Scan card/voucher" option 4018, a "Test paper/Homework" option 4019, and the like may further be presented in the interface 401.

In response to a selection operation performed by the user on any functional option, the electronic device may switch to a corresponding recognition function, to implement recognition. For example, in response to a tap operation performed by the user on the "Intelligent recognition" option 4012 in the interface 401 shown in FIG. 4, the mobile phone may switch from a code scanning function selected by default to an intelligent recognition function. For example, an interface 402 shown in FIG. 4 is displayed, and "Intelligent recognition" 4012 is currently selected in the interface 402.

A text extraction function is used for recognizing and extracting a text in a user interface, and may also be used for marking a text entity. The text entity includes: a certificate number (such as an identity card number or a passport number) for identity recognition, an address, a phone number, flight information, an express number, an e-mail address, a link, and the like. For example, when it is recognized that there is a phone number in a picture, a phone mark is added to the phone number.

Intelligent recognition function: The foregoing text extraction function may be integrated into the intelligent recognition function. In addition, the intelligent recognition function may further be used for recognizing items in a user interface and marking an item entity among them. The item entity includes: an animal, a plant, a building, food, and the like. For example, when it is recognized that there is an animal in a picture, an animal mark is added to a corresponding region. That is, the intelligent recognition function may implement recognition and marking of a text, and recognition, matting, and annotation of an item.

In addition, the intelligent recognition function may further be recognizing and marking a graphic code. The graphic code includes a barcode, a two-dimensional barcode, and the like.

A translation function may be used for recognizing a text in the user interface and then translating the text.

After opening of the smart vision APP is triggered in the foregoing Manner 1 or Manner 2, an object recognized by using a corresponding recognition function includes: a picture photographed by using a corresponding recognition function or a picture selected from a gallery. This is not specifically limited in embodiments of this application.

For example, in response to a tap operation (which may also be referred to as a first trigger operation or a second trigger operation) performed by the user on a photographing button 4020 in the interface 402 shown in FIG. 4, the mobile phone may photograph a picture and recognize the photographed picture by using a currently selected recognition function (that is, the intelligent recognition function), to obtain a recognition result.

In another example, in response to a tap operation performed by the user on a gallery entry 4021 in the interface 402, the mobile phone may provide pictures in the gallery for the user to select. For example, an interface 403 shown in FIG. 4 is displayed. The interface 403 includes thumbnails of a plurality of pictures in the gallery. In response to a selection operation performed by the user on any thumbnail, for example, a thumbnail 4031, the mobile phone may recognize, by using a currently selected recognition function, a picture corresponding to the selected thumbnail, to obtain a recognition result.

Moreover, after opening of the smart vision APP is triggered in the foregoing Manner 1 or Manner 2, the object recognized by using the corresponding recognition function further includes: content that is, under the corresponding recognition function, framed by the mobile phone but is not photographed yet, that is, content in a viewfinder interface. For example, a recognized object may be content corresponding to a viewfinder screen 4022 displayed in the viewfinder interface 402 shown in FIG. 4. In this case, the mobile phone may recognize content in the viewfinder interface by using an augmented reality (augmented reality, AR) recognition technology, to obtain a recognition result.

### Manner 3: After opening a gallery application or displaying a picture in a gallery application, the mobile phone automatically opens the smart vision APP.

Alternatively, after opening a gallery application or displaying a picture in a gallery application, the mobile phone may automatically open the smart vision APP to parse a picture in the gallery application and recommend an intelligent recognition function in the smart vision APP based on a parsing result.

In some embodiments, after opening the gallery application, the mobile phone may open the smart vision APP to parse pictures in the gallery by using the smart vision APP, to determine a target picture. The target picture may include at least one of the following pictures: a non-blank picture, a picture with an item, a picture with a text, and a picture with a graphic code. That is, the target picture usually includes useful information such as a text, an item, and a graphic code. A picture that is not the target picture does not include the foregoing useful information.

In response to a viewing operation performed by the user on the target picture, for example, a tap operation on a thumbnail corresponding to the target picture, the mobile phone may display the target picture and provide an entry to the intelligent recognition function. The entry to the intelligent recognition function may be used for triggering the mobile phone to recognize and mark content, such as a text, an item, and a graphic code, in the target picture. In this way, in response to a viewing operation, the mobile phone can rapidly recommend the intelligent recognition function, to provide an entry for a user to recognize and mark content in a picture.

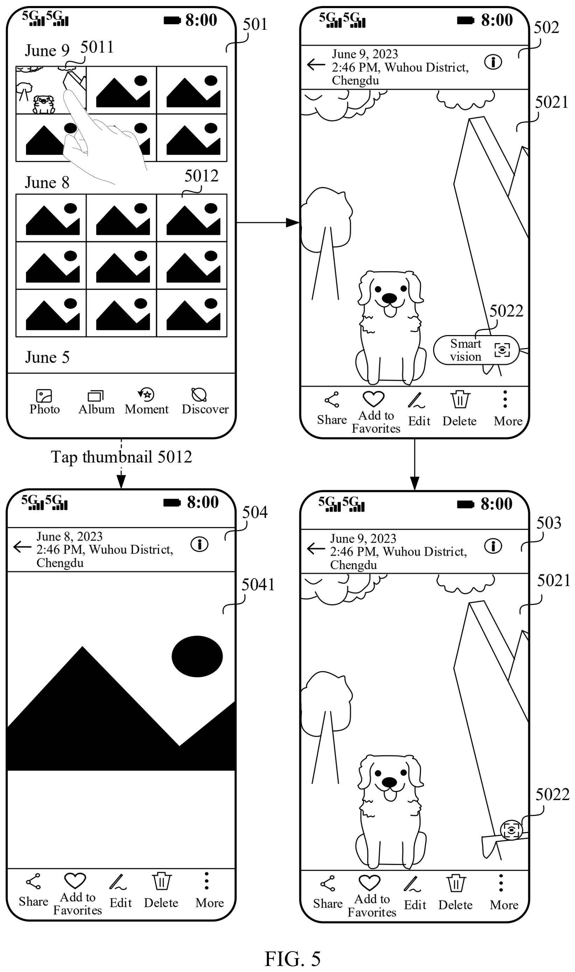

For example, after opening the gallery application, the mobile phone may display an interface 501 shown in FIG. 5. The interface 501 is an application interface of the gallery application. The interface 501 includes thumbnails, such as a thumbnail 5011, of a plurality of pictures in the gallery. Using an example in which the target picture is a picture corresponding to the thumbnail 5011, in response to a tap operation performed by the user on the thumbnail 5011, the mobile phone may display an interface 502 shown in FIG. 5. The interface 502 includes a picture 5021 corresponding to the thumbnail 5011, and further includes "Smart vision" 5022. "Smart vision" 5022 is an entry to the intelligent recognition function. That is, the mobile phone recognizes the picture 5021 as the target picture.

After opening the gallery each time, the mobile phone may parse only a newly added picture in the mobile phone between two times of opening the gallery, and reference may be made to a historical recognition result for another picture. In this way, after opening the gallery each time, the mobile phone may parse only a small quantity of pictures, thereby reducing power consumption of the mobile phone.

In some other embodiments, after receiving a viewing operation performed by the user on a picture in a gallery application, the mobile phone may open the smart vision APP to parse a currently viewed picture by using the smart vision APP, to determine whether the currently viewed picture is a target picture. In this way, the mobile phone may parse only the currently viewed picture, thereby reducing power consumption during each time of parsing.

Certainly, occasions of triggering the mobile phone to automatically open the smart vision APP in the foregoing Manner 3 are merely some typical cases, and are not actually limited thereto. For example, the mobile phone may alternatively automatically open the smart vision APP to parse pictures in the gallery when the mobile phone is being charged or at a preset time (for example, early morning), to determine a target icon. Based on this, after opening the gallery application, the mobile phone may open the smart vision APP to parse pictures that have not been parsed, that is, newly added pictures between previous parsing and current opening of the gallery application. Alternatively, based on this, the mobile phone opens the smart vision APP to parse a currently viewed picture only after receiving a viewing operation performed by the user on a picture that has not been parsed in the gallery application.

If the currently viewed picture is a target picture, the mobile phone may provide an entry to the intelligent recognition function. If the currently viewed picture is not a target picture, the mobile phone does not provide an entry to the intelligent recognition function. Using an example in which a thumbnail 5012 in the interface 501 shown in FIG. 5 is a second thumbnail, in response to a tap operation on the thumbnail 5012, the mobile phone may display an interface 504 shown in FIG. 5. The interface 504 includes a picture 5041 corresponding to the thumbnail 5012. However, the interface 504 does not include an entry to the intelligent recognition function. That is, the interface 504 is a fourth interface.

After in the foregoing Manner 3, the smart vision APP is automatically opened, and the entry to the intelligent recognition function is provided, if display duration of the entry to the intelligent recognition function reaches duration 1, the mobile phone may collapse the entry to the intelligent recognition function to an edge of the user interface, thereby avoiding affecting the user from viewing the picture. Using an example in which the duration 1 is 5s, after the display duration of "Smart vision" 5022 in the interface 502 shown in FIG. 5 reaches 5s, the mobile phone may display an interface 503 shown in FIG. 5. The interface 503 also includes "Smart vision" 5022. However, the interface 503 differs from the interface 502 in that "Smart vision" 5022 in the interface 503 is displayed at an edge position of the interface 503. It should be noted that a function of a collapsed entry to the intelligent recognition function is the same as that of an uncollapsed entry to the intelligent recognition function, both of which can trigger the mobile phone to recognize the target picture by using the intelligent recognition function. Details are not described herein again.

Further, in a use process from opening a gallery process to closing the gallery process, after receiving a trigger operation performed by the user on the entry to the recommended intelligent recognition function, even if responding again to a viewing operation performed by the user on the target picture, the mobile phone no longer displays the uncollapsed entry to the intelligent recognition function and instead directly displays the collapsed entry to the intelligent recognition function.

After in the foregoing Manner 3, the smart vision APP is automatically opened, and the entry to the intelligent recognition function is provided, in response to a trigger operation (which may be referred to as a first trigger operation or a second trigger operation), such as a tap operation, performed by the user on the entry to the intelligent recognition function, the mobile phone may recognize the target picture by using the intelligent recognition function, to obtain a recognition result. For example, in response to a tap operation performed by the user on "Smart vision" 5022 in the interface 502 shown in FIG. 5, the mobile phone may recognize the picture 5021 by using an intelligent recognition function provided by the smart vision APP, to obtain a recognition result.

### Manner 4: In response to an operation 1 (which may also be referred to as a fifth trigger operation) performed by the user, the mobile phone opens the smart vision APP.

Alternatively, after receiving an operation 1 performed by the user on a current interface (which may be referred to as a first interface or a second interface), the mobile phone may open the smart vision APP to parse content of the current interface, and recommend a processing function based on a parsing result. That is, in Manner 4, the mobile phone may be triggered by the operation 1 to open the smart vision APP to parse out a corresponding requirement and perform recommendation.

The operation 1 may be a touch and hold operation, a slide operation, a two-finger press operation, or the like. This is not specifically limited in embodiments of this application. Description is provided below by mainly using an example in which the operation 1 is a two-finger press operation.

The current interface may be any user interface displayed in a process of using the mobile phone. For example, the current interface may be an application interface of a social application (such as a chat application or a life sharing application), a picture viewing interface, or the like. This is not specifically limited in embodiments of this application. That is, in Manner 4, the mobile phone not only can intelligently recommend a processing function for a picture in the gallery application, but also can recommend a processing function for another interface.

At this point, it should be noted that if the current interface is a picture viewing interface, the mobile phone can directly use the picture as the content of the current interface for parsing by the smart vision APP. However, if the current interface is not a picture viewing interface, it is usually difficult for the mobile phone to directly obtain the content of the current interface. Based on this, in a specific implementation, in response to a two-finger press operation performed by the user on the current interface, the mobile phone may take a screenshot of the current interface and open the smart vision APP to parse the screenshot. That is, the mobile phone may obtain, by taking a screenshot, the content of the current interface for parsing by the smart vision APP. Correspondingly, parsing, by the smart vision APP, the screenshot is equivalent to parsing the content of the current interface.

In another specific implementation, in response to a two-finger press operation performed by the user on the current interface and when the current interface is a picture viewing interface, the mobile phone may open the smart vision APP to parse a currently viewed picture. In response to a two-finger press operation performed by the user on the current interface and when the current interface is not a picture viewing interface, the mobile phone may take a screenshot of the current interface and open the smart vision APP to parse the screenshot. In this way, the mobile phone may take a screenshot pertinently for parsing by the smart vision APP.

Description is provided below by mainly using an example in which, in response to a two-finger press operation on the current interface, the mobile phone takes a screenshot of the current interface and opens the smart vision APP to parse the screenshot. The following content of this application may alternatively be a technical solution after a picture or interface content is parsed after the smart vision APP is opened in Manner 1 to Manner 3.

The processing function may be a recognition function, such as a translation function, an intelligent recognition function, or a text extraction function, provided by the smart vision APP. Alternatively, the processing function may be another function such as a privacy protection function. The privacy protection function is used for recognizing privacy information and block the privacy information, to protect the privacy information.

In some embodiments, after it is parsed out by using the smart vision APP that a quantity of foreign words in the current interface reaches a quantity threshold (which may also be referred to as a first quantity), the mobile phone may provide an entry (which may also be referred to as a translation control) to a translation function. In this way, the mobile phone may recommend a translation function in the smart vision APP for a scenario having a translation requirement.

The quantity threshold may be a fixed quantity, or may be a quantity of text included in the current interface (that is, the interface is entirely in a foreign language), or may be a quantity that is a fixed ratio (for example, 90% or 80%) of a quantity of text included in the current interface. This is not specifically limited in embodiments of this application.

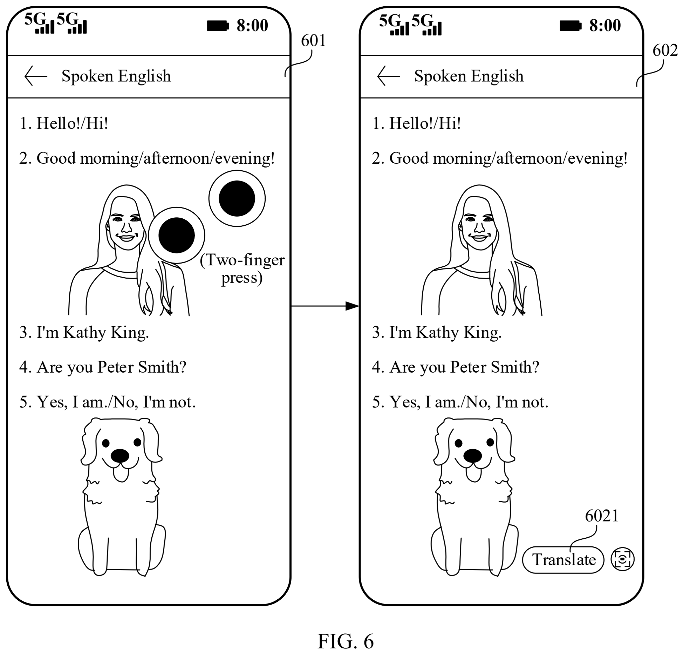

Using an example in which the quantity threshold is a quantity of text included in the current interface, the mobile phone may display an interface 601 shown in FIG. 6, where the interface 601 is entirely in English. In response to a two-finger press operation performed by the user on the interface 601, the mobile phone may take a screenshot of the interface 601 and open the smart vision APP to parse the screenshot. After it is parsed out that the text included in the screenshot is entirely in a foreign language (different from a language set by the system), the mobile phone may display an interface 602 shown in FIG. 6. Different from the interface 601, the interface 602 includes "Translate" 6021. "Translate" 6021 is an entry to a translation function.

Conversely, if it is parsed out by using the smart vision APP that a quantity of foreign words in the current interface does not reach a quantity threshold, the mobile phone does not provide the entry to the translation function. That is, the mobile phone does not recommend the translation function for every interface on which a two-finger press operation is performed, and instead, performs dynamic recommendation based on a quantity of foreign words.

In some other embodiments, after it is parsed out by using the smart vision APP that the current interface includes privacy information, the mobile phone may provide an entry (which may also be referred to as a privacy protection control) to a privacy protection function. In this way, the mobile phone may recommend a privacy protection function for a scenario having a privacy protection requirement.

The privacy information includes an address, a phone number, an e-mail address, a certificate number/picture for identity recognition, and the like.

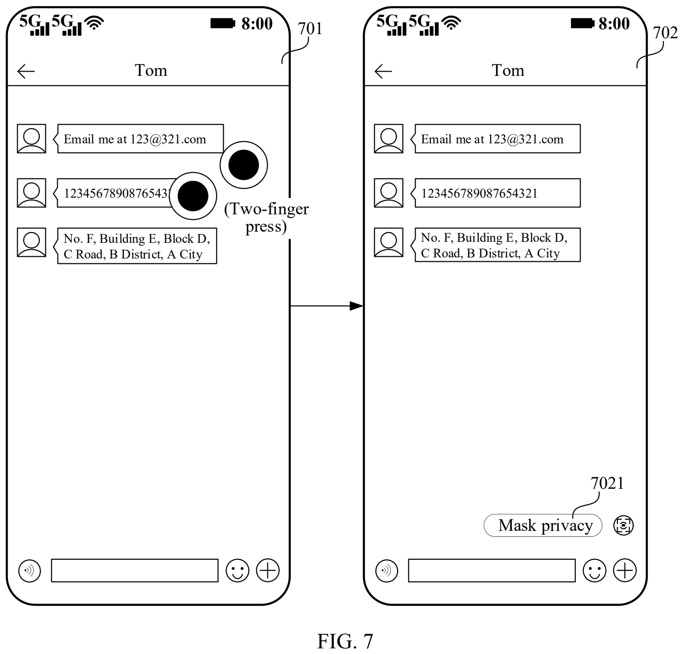

For example, the mobile phone may display an interface 701 shown in FIG. 7. The interface 701 is an application interface of a chat application. In response to a two-finger press operation performed by the user on the interface 701, the mobile phone may take a screenshot of the interface 701 and open the smart vision APP to parse the screenshot. After it is parsed out that the screenshot includes privacy information such as an address or an e-mail address, the mobile phone may display an interface 702 shown in FIG. 7. Different from the interface 701, the interface 702 includes "Mask privacy" 7021. "Mask privacy" 7021 is an entry to a privacy protection function.

Conversely, if it is parsed out by using the smart vision APP that the current interface does not include privacy information, the mobile phone does not provide the entry to the privacy protection function. That is, the mobile phone does not recommend the privacy protection function for every interface on which a two-finger press operation is performed, and instead, performs dynamic recommendation based on whether the current interface includes privacy information.

In some other embodiments, after it is parsed out by using the smart vision APP that the current interface includes a text, but does not include an entity (including a text entity and an item entity), the mobile phone may provide an entry (which may also be referred to as a selection control) to a selection function. It should be noted that the mobile phone can select a text only after extracting the text. Therefore, the selection function may be understood as a sub-function of the foregoing text extraction function.

It may be understood that if there is no entity in the current interface, it indicates that the user does not need to perform an operation on an entity, and the mobile phone may directly provide the entry to the selection function. In this way, the mobile phone can perform a selection operation on the text in the current interface quickly, to further copy, cut, or share the text subsequently.

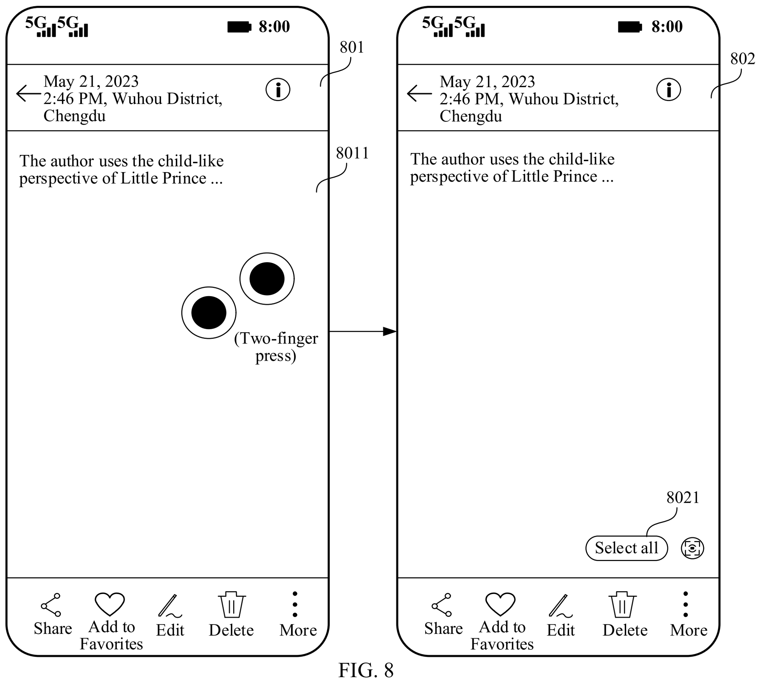

For example, the mobile phone may display an interface 801 shown in FIG. 8. The interface 801 includes a picture 8011. The picture 8011 includes a text, but does not include an entity. In response to a two-finger press operation performed by the user on the interface 801, the mobile phone may take a screenshot of the interface 801 and open the smart vision APP to parse the screenshot. After it is parsed out that the screenshot includes a text, but does not include an entity, the mobile phone may display an interface 802 shown in FIG. 8. Different from the interface 801, the interface 802 includes "Select all" 8021. "Select all" 8021 is an entry to the selection function.

Conversely, if it is parsed out by using the smart vision APP that the current interface does not include a text, or includes a text and an entity, the mobile phone does not provide the entry to the selection function. That is, the mobile phone does not recommend the selection function for every interface on which a two-finger press operation is performed, and instead, performs dynamic recommendation based on whether the current interface includes a text and/or an entity.

The foregoing scheme of recommending the selection function is especially applicable to some interfaces on which a copy operation cannot be performed, such as the foregoing interface 801, or some application interfaces that restrict a user from copying, so that the user can perform an operation on a text in these interfaces.

In view of the above, in Manner 4, for different interfaces, in response to the same two-finger press operation performed by the user on the interfaces, the mobile phone may parse the user interfaces by using the smart vision APP and recommend different recognition functions. For example, the current interface is an interface 2. In response to a two-finger press operation performed by the user on the interface 2, the mobile phone may recommend a processing function 1. The current interface is an interface 3. In response to a two-finger press operation performed by the user on the interface 3, the mobile phone may recommend a processing function 2. The processing function 1 and the processing function 2 are different processing functions.

Further, a same interface may satisfy recommendation conditions of different processing functions, for example, satisfy recommendation conditions of both the translation function and the selection function. For this case, the mobile phone may simultaneously recommend all processing functions satisfying conditions. Alternatively, an order of matching between different (types of) interfaces and processing functions may be configured in the mobile phone, and the mobile phone may recommend only a processing function whose matching degree with the current interface is the highest. This is not specifically limited in embodiments of this application.

For example, for a user interface that does not allow Touch and hold to copy, the selection function may be configured with the highest matching degree in the mobile phone, to help perform an operation on a text in the user interface. For an application interface of a chat application, the privacy protection function may be configured with the highest matching degree in the mobile phone, to help mask privacy information involved in chat content and then send the chat content. Moreover, for a website in a foreign language, the translation function may be configured with the highest matching degree in the mobile phone, to help translate the foreign language.

After in Manner 4, the smart vision APP is automatically opened, and an entry to a corresponding processing function is provided, in response to a trigger operation (which may be referred to as a first trigger operation or a second trigger operation), such as a tap operation, performed by the user on the entry to the processing function, the mobile phone may process the current interface by using a recommended processing function.

At this point, it should be noted that conditions of triggering to open the smart vision APP in the foregoing Manner 3 and Manner 4 may also be exchanged. That is, opening the gallery or receiving a viewing operation on a picture in the gallery in Manner 3 may be exchanged with a two-finger press operation in Manner 4. For example, in response to opening the gallery or receiving an operation of viewing a picture in the gallery, the mobile phone may open the smart vision APP to parse whether conditions for recommending various processing functions in the foregoing Manner 4 are satisfied, and recommend corresponding processing functions if the conditions for recommending various processing functions in the foregoing Manner 4 are satisfied. In another example, in response to a two-finger press operation, the mobile phone may open the smart vision APP and parse whether a condition for recommending an intelligent recognition function in the foregoing Manner 3 is satisfied, and if the conditions is satisfied, the intelligent recognition function is recommended.

After the foregoing Manner 1 to Manner 4 are performed, the mobile phone may perform processing by using corresponding functions (for example, various recognition functions that are provided by the smart vision APP and that are selected in Manner 1 and Manner 2, or an intelligent recognition function that is provided by the smart vision APP and that is recommended in Manner 3, or various processing functions recommended in Manner 4).

It should be noted herein that when performing processing by using a corresponding function, the mobile phone needs to recognize a text, an item, a graphic code, and the like in the current interface, and perform various operations such as marking, selection, and translation, which may change information in the current interface. Based on this, in a specific implementation, in response to the user triggering an operation of performing processing by using a corresponding function, for example, a tap operation on the photographing button 4020 and a selection operation on the thumbnail 4031 in Manner 1 and Manner 2, a tap operation on "Smart vision" 5022 in Manner 3, and a trigger operation on entries to various recommended processing functions in Manner 4, the mobile phone may first take a screenshot of the current interface and display the screenshot, recognize the screenshot, and then perform various operations such as marking, selection, and translation. In this way, the mobile phone may perform an operation on the screenshot without affecting the current interface. It should be noted that in a process of browsing full pictures in the gallery and recognizing and processing picture content, the mobile phone may not perform screenshot processing.

The following separately describes the intelligent recognition function, the text extraction function, the translation function, and the privacy protection function. It should be noted that, in the following, details of a process in which the mobile phone first takes a screenshot and performs an operation on the screenshot in response to that the user triggers an operation of performing processing by using a corresponding function are not described one by one again.

First, the intelligent recognition function is described.

The mobile phone can recognize and mark an item entity by using the intelligent recognition function.

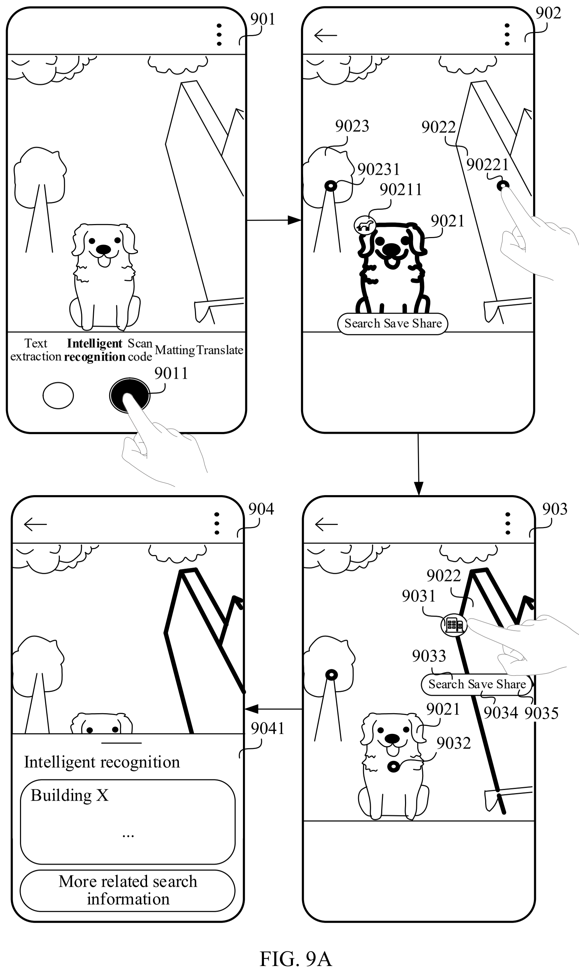

Using an example in which performing processing by using the intelligent recognition function is triggered in the foregoing Manner 1, after the functional option of the intelligent recognition function is selected, the mobile phone may display an interface 901 shown in FIG. 9A. In response to a tap operation performed by the user on a photographing button 9011 in the interface 901, the mobile phone may display an interface 902 shown in FIG. 9A. The interface 902 is a recognition result page (also referred to as a first interface). In this embodiment of this application, in response to an operation of tapping a photographing button by the user in the interface 901 corresponding to the intelligent recognition function, the mobile phone may perform photographing, but does not save a photographing result. Content displayed in the interface 902 is a cached photographing result. If the user taps a return control in the interface 902 and does not save a photographing result, the mobile phone does not store the photographing result. Alternatively, the user continues to edit the content of the interface 902 and chooses to save the content, and the mobile phone may also store a corresponding result. Various item entities are marked in the interface 902 by using marks such as a circle and an animal icon. For example, a dog 9021 is marked with an animal icon 90211, a building 9022 is marked with a circle 90221, and a plant 9023 is marked with a circle 90231.

In the recognition result, the mobile phone may highlight an item entity whose area is the largest and/or that is recognized most accurately as a focus item entity (a bold line in this specification represents a highlighting effect, but is not actually limited thereto), and marks the focus item entity with a category icon. For example, a recognition result of the dog 9021 in the interface 902 is the most accurate. Therefore, in the interface 902, the dog 9021 is highlighted. In addition, the animal icon 90211 is marked at an upper left corner of the dog 9021, which clearly indicates that the current focus item entity is an animal, that is, the animal icon 90211 is a category icon.

However, other item entities in the recognition result are not highlighted, and are all marked with common symbols. For example, the building 9022 and the plant 9023 in the interface 902 are not highlighted, and are marked with circles, the building 9022 is marked with the circle 90221, and the plant 9023 is marked with the circle 90231.

After the recognition result is displayed, in response to an operation of switching a focus (which may be referred to as a fourth trigger operation), the mobile phone may switch the focus item entity. That is, a focus is switched from a current focus item entity (which may be referred to as a first item entity) to another item entity (which may be referred to as a third item entity). Similarly, a switched focus item entity is highlighted, and the switched focus item entity is marked with a category icon.

In some embodiments, the operation of switching a focus may be a trigger operation, such as a tap operation, on a mark (for example, the first item mark of the third item entity) corresponding to a target item entity other than a current focus item entity.

Using an example in which the current focus item entity is the dog 9021 in the interface 902 shown in FIG. 9A, and the target item entity is the building 9022 in the interface 902 shown in FIG. 9A, in response to a tap operation performed by the user on the circle 90221 in the interface 902, the mobile phone may display an interface 903 shown in FIG. 9A. Different from the interface 902, the building 9022 is highlighted in the interface 903, and a building icon 9031 is marked at an upper left corner of the building 9022, which clearly indicates that a focus item entity after switching is the building, that is, the building icon 9031 is a category icon. In addition, in the interface 903, the dog 9021 is no longer highlighted, and the dog 9021 is also marked with a circle such as a circle 9032. That is, the focus item entity is switched from the dog 9021 to the building 9022.

In some other embodiments, the operation of switching a focus includes a tap operation on a mark corresponding to a target item entity other than a current focus item entity and a tap operation on the current focus item entity.

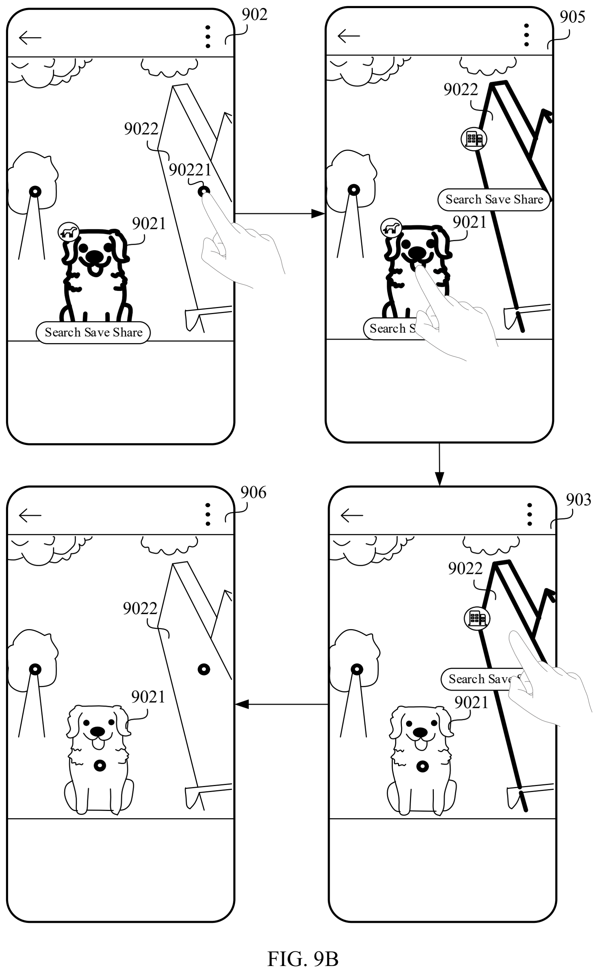

Using an example in which the current focus item entity is the dog 9021 in the interface 902 shown in FIG. 9B, and the target item entity is the building 9022 in the interface 902 shown in FIG. 9B, in response to a tap operation performed by the user on the circle 90221 in the interface 902, the mobile phone may display an interface 905 shown in FIG. 9B. Different from the interface 902, both the dog 9021 and the building 9022 are highlighted in the interface 905. Subsequently, in response to a tap operation performed by the user on the dog 9021 in the interface 905, the mobile phone may display an interface 903 shown in FIG. 9B. Different from the interface 905, in the interface 903, the dog 9021 is no longer highlighted, and only the building 9022 is highlighted. In this way, the focus may also be switched from the dog 9021 to the building 9022.

Further, in this embodiment, in response to a tap operation performed by the user on the building 9022 in the interface 903 shown in FIG. 9B, the mobile phone may display the interface 906 shown in FIG. 9B, that is, further unhighlight the building 9022. That is, in response to a tap operation performed by the user on the focus item entity, the focus item entity may be unhighlighted, that is, the focus item entity is switched into a non-focus.

In response to a trigger operation, such as a tap operation, performed by the user on a category icon of a focus item entity, the mobile phone may display introduction information of the focus item entity, to help the user learn of the focus item entity. For example, in response to a tap operation performed by the user on the building icon 9031 in the interface 903 shown in FIG. 9A, the mobile phone may display an interface 904 shown in FIG. 9A. Different from the interface 903, the interface 904 includes a pop-up window 9041, where the pop-up window 9041 includes introduction information of the building 9022.

The mobile phone may further display a shortcut entry around the focus item entity, to implement a quick operation on the focus item entity. For ease of description, the shortcut entry to the first item entity may be referred to as a first shortcut entry, and the shortcut entry to the third item entity may be referred to as a second shortcut entry.

The shortcut entry may be fixed, for example, a search entry, a purchase entry, a copy entry, a save entry, or a share entry.

Alternatively, the shortcut entries may be different corresponding to different focus item entities. For example, for a building, a mobile phone may provide a search entry. For a commodity, the mobile phone may provide a purchase entry and a price comparison entry. In this way, the mobile phone can provide a shortcut entry pertinently, to accurately satisfy a requirement of a user.

Using an example in which a focus item entity is the building 9022 in the interface 903 shown in FIG. 9A, the following shortcut entries are displayed at a lower edge of the building 9022: "Search" 9033, "Save" 9034, and "Share" 9035.

In response to a trigger operation, such as a tap operation, performed by the user on the shortcut entry, the mobile phone may perform a corresponding quick operation for the focus item entity. In response to a tap operation performed by the user on the search entry, the mobile phone may search a network for information related to a focus item entity and display the information related to the focus item entity. For example, in response to a tap operation performed by the user on "Search" 9033 in the interface 903, the mobile phone may search for related information of the building 9022. For example, after the search is completed, the mobile phone may display the interface 904 shown in FIG. 9A. The introduction information in the pop-up window 9041 of the interface 904 is obtained through the search.

Further, in response to a move operation, such as a touch and hold to drag operation, performed by the user on the focus item entity, the mobile phone may move a display position of the focus item entity. It should be noted that after the display position of the focus item entity is moved, the mobile phone can still display the focus item entity at an initial position of the focus item entity. Certainly, the mobile phone may alternatively not display the focus item entity at the initial position. This is not specifically limited in embodiments of this application.

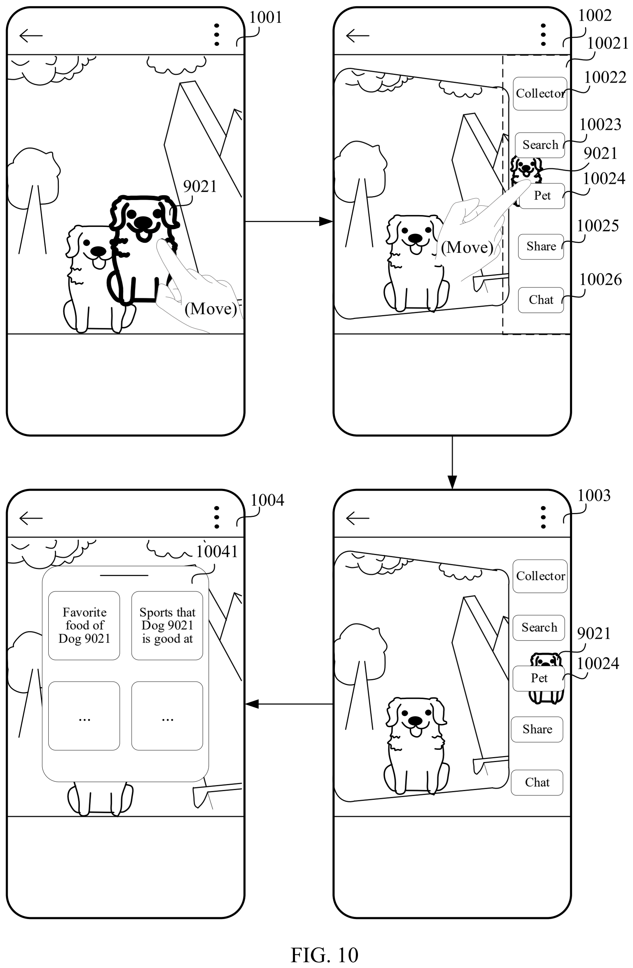

Using an example in which the focus item entity is the dog 9021 in the interface 902 shown in FIG. 9A, in response to a touch and hold to drag operation performed by the user on the dog 9021, the mobile phone may display an interface 1001 shown in FIG. 10. Different from the interface 902, a position of the dog 9021 in the interface 1001 is changed.

In response to that the display position of the focus item entity after the focus item entity is moved reaches a target region in the user interface, the mobile phone displays shortcut icons (which may also be referred to as associated entries) of a plurality of associated applications/functions/services, to quickly perform processing related to the associated applications/functions for the focus item entity. For ease of description, an interface displaying a shortcut icon may be referred to as a fourth interface. Description is provided below by mainly using an associated application as an example. Correspondingly, the shortcut icon is an application icon.

The target region may be an edge region of the user interface, for example, a left edge or a right edge.

The associated application may be fixed, such as a chat application, a search application, a shopping application, a price comparison application, a sharing application, a collector application, a printing application, a recipe application, or a pet application. Alternatively, corresponding to different focus item entities, associated applications may not be completely the same, that is, different shortcut icons may be included. For example, for a commodity, the associated application may include a shopping application and a price comparison application. For food, the associated application may include a recipe application. For animals, the associated application may include a pet application. Associated functions or services may also be displayed in a similar manner, and details are not described herein again.

Still referring to FIG. 10, as the user continues to perform a move operation on the dog 9021 in the interface 1001, the dog 9021 may be moved into a region 10021 (indicated by a dashed-line box in the figure, where the dashed-line box actually does not exist) in an interface 1002 shown in FIG. 10, and the region 10021 is a target region. The interface 1002 further includes shortcut icons of associated applications such as a shortcut icon 10022 of a collector application, a shortcut icon 10023 of a search application, a shortcut icon 10024 of a pet application, a shortcut icon 10025 of a sharing service, and a shortcut icon 10026 of a chat application.

In a specific implementation, in a process of moving the display position of the focus item entity, the mobile phone may further display an animation effect. For example, the mobile phone may display an animation effect of "One door" formed by a picture in the interface 1001 shown in FIG. 10 from occupying the entire user interface to becoming a picture in the interface 1002.

In a specific implementation, after the focus item entity is moved into the target region, the mobile phone may zoom out the focus item entity. For example, the dog 9021 in the interface 1002 is far smaller than the dog 9021 in the interface 1001.

After the shortcut icons of the associated applications are displayed, in response to that a focus item entity is moved to a position of a target shortcut icon (which may also be referred to as a first associated entry), the mobile phone may display an interface 1 (which may also be referred to as a fifth interface) of the target associated application (which may also be referred to as a first application). The target associated application is an associated application corresponding to the target shortcut icon in the plurality of associated applications, and the interface 1 includes information about the focus item entity.

Using an example in which the target shortcut icon is the shortcut icon 10024 in the interface 1002 shown in FIG. 10, that is, the target associated application is a pet application, and the interface 1 is an application icon of the pet application, as the user continues to perform a move operation on the dog 9021 in the interface 1001, the mobile phone may display an interface 1003 shown in FIG. 10, and the dog 9021 in the interface 1003 is moved to a position of the shortcut icon 10024. In response to that the dog 9021 is moved to the position of the shortcut icon 10024, the mobile phone may display an interface 1004 shown in FIG. 10. The interface 1004 includes a floating window 10041. The application interface of the pet application is displayed in the floating window 10041. The application interface of the pet application includes information related to the dog 9021.

At this point, it should be noted that in the foregoing specific implementation of recommending a shortcut icon, the user needs to first drag the focus item entity to the target region to trigger displaying of the shortcut icon, which actually is not limited thereto. For example, in response to a move operation performed by the user on a focus item entity and that a movement distance exceeds a distance threshold, the mobile phone may display a shortcut icon. In another example, in response to a move operation performed by the user on the focus item entity, the mobile phone may display a shortcut icon.

In the foregoing description about the intelligent recognition function, recognition of item entities, such as the dog 9021, the building 9022, and the plant 9023, and subsequent processing based on a recognition result are mainly described. Moreover, it can be learned based on the foregoing description about the intelligent recognition function that: the intelligent recognition function may also be used for text recognition. For details about related features of the intelligent recognition function for text recognition, refer to the following description about the text extraction function. No further description is provided herein.

Second, the text extraction function is described.

By using the text extraction function, the mobile phone can recognize and extract a text, and can also mark a text entity.

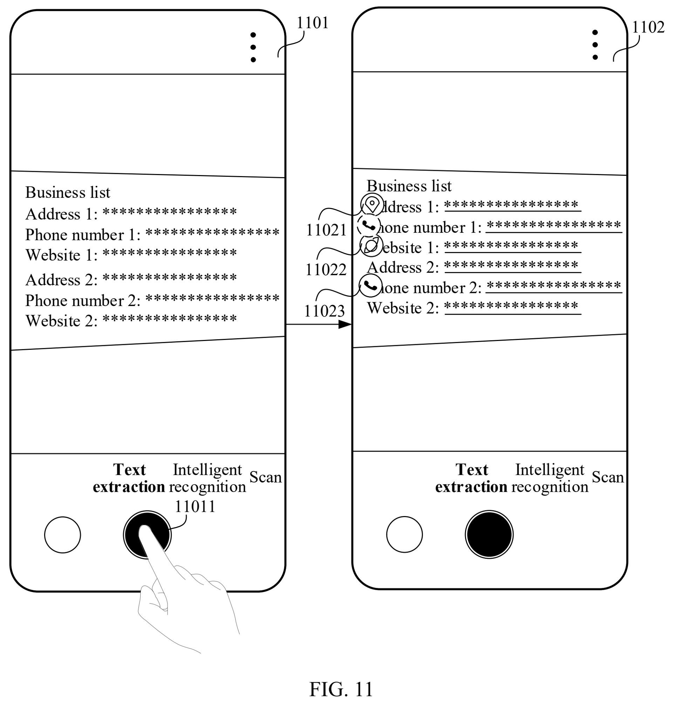

Using an example in which performing processing by using the text extraction function is triggered in the foregoing Manner 1, after the functional option of the text extraction function is selected, the mobile phone may display an interface 1101 shown in FIG. 11. In response to a tap operation performed by the user on a photographing button 11011 in the interface 1101, the mobile phone may display an interface 1102 shown in FIG. 11. The interface 1102 is a recognition result page. In the interface 1102, an address 1 is marked with a location icon 11021, a website 1 is marked with a network icon 11022, and a phone 2 is marked with a phone icon 11023.

In the recognition result, the mobile phone may mark all text entities. Alternatively, the mobile phone may mark only some text entities, to avoid chaotic marking.

In a specific implementation, for text entities of a same category, the mobile phone may only mark a text of this category that appears for the first time. The mobile phone marks the text entities of the same category in top-to-bottom order and left-to-right order on the interface, and that the text of this category that appears for the first time means first appearance in top-to-bottom order and left-to-right order.

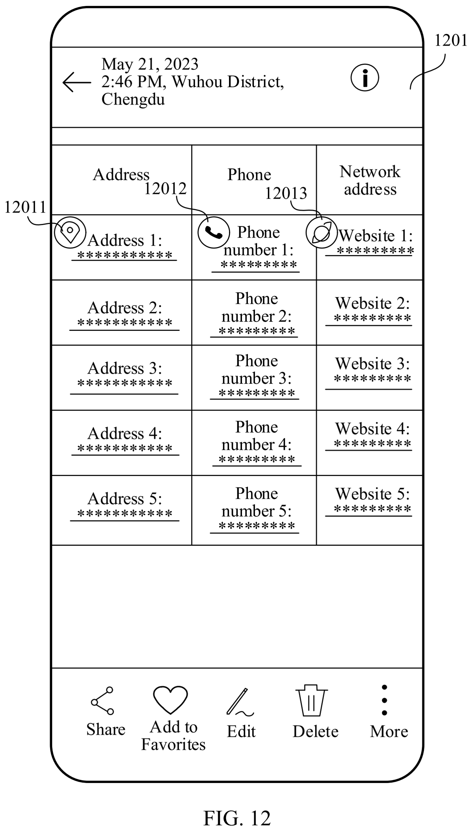

For example, after implementing a text extraction function to recognize a current interface, the mobile phone may display an interface 1201 shown in FIG. 12. The interface 1201 is a recognition result page. In the interface 1201, an address that appears for the first time, namely, an address 1, is marked with a location icon 12011, a phone number that appears for the first time, namely, a phone number 1, is marked with a phone icon 12012, and a website link that appears for the first time, namely, a website 1, is marked with a network icon 12013.

That is, if two text entities (which may be referred to as a first text entity and a fifth text entity) have a same entity category, only one text entity (for example, the first text entity) may be marked. If two text entities have different entity categories, the two text entities may be separately marked. For ease of description, a mark of the first text entity may be referred to as a first text mark, and a mark of the fifth text entity may be referred to as a third text mark.

In another specific implementation, if blocking occurs between entity icons of two text entities (which may be referred to as a first text entity and a sixth text entity), the mobile phone may omit an entity icon of one of the text entities, for example, omit an entity icon of a sixth text entity (which may be referred to as a fourth text mark), to avoid blocking of the entity icon. For example, in the interface 1102, a phone number 1 is further included between the address 1 marked with the location icon 11021 and the website 1 marked with the network icon 11022. If the phone number 1 is marked with a phone icon (indicated by a dashed line in the interface 1102, where the dashed line actually does not exist)), blocking between marks may be caused. Therefore, the mobile phone may not mark the phone number 1. Therefore, blocking between marks can be avoided.

Specifically, the mobile phone may mark text entities in top-to-bottom order and left-to-right order. If blocking occurs between a current entity icon and a marked entity icon, the mobile phone may cancel marking of the current entity icon.

In another specific implementation, the mobile phone may only mark a quantity 1 of text entity categories in descending order by interest of a user.

Specifically, the mobile phone or another device may analyze interest of a large quantity of users (or may analyze only a local user) in a plurality of categories of text entities. Interest of a user in a text entity is positively correlated with a quantity of times that the user triggers the text entity. In a process of using the mobile phone by the user, a larger quantity of times of performing a trigger operation (such as a tap operation or a touch and hold operation) on a specific category of text entities indicates higher interest of the user in the category of text entities.

In another specific implementation, when a text is recognized by using an intelligent recognition function, the mobile phone may further determine, based on an item entity included in a current interface, a text entity matching the item entity, and mark the text entity. If categories of item entities are different, categories of marked text entities are also different.

Specifically, if the first interface includes a plurality of text entities (including a first text entity and a second text entity), and the current interface includes an item entity 1 (marked as a first item entity), the first text entity matching the item entity 1 is marked in the plurality of text entities, and the second text entity that does not match the item entity 1 is not marked. If the second interface includes a plurality of text entities (including a third text entity and a fourth text entity), the current interface includes an item entity 2 (marked as a second item entity), the third text entity matching the item entity 1 is marked in the plurality of text entities, and the fourth text entity that does not match the item entity 1 is not marked. A mark of the third text entity may be referred to as a second text mark.

That is, in an interface having an item entity of a specific category (the entity category of the first item entity), the electronic device may mark text entities of a first category (the entity category of the first text entity and the fourth text entity), but not mark text entities of the second category (the entity category of the second text entity and the third text entity). Moreover, in an interface having an item entity of another category (the entity category of the second item entity), the electronic device may mark text entities of the second category, but not mark text entities of the first category. In view of the above, the electronic device can mark a matching text entity based on an item entity included in a user interface, to provide a user with a mark for quickly obtaining information from the user interface, thereby helping improve efficiency of human-computer interaction.

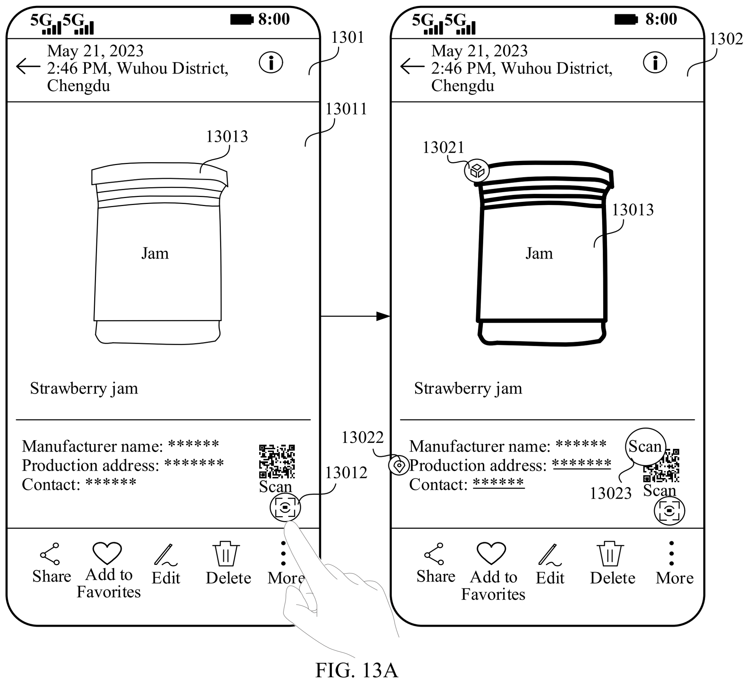

Using an example in which the translation function is recommended in the foregoing Manner 3, after the intelligent recognition function is recommended, the mobile phone may display an interface 1301 (which may be considered as a specific first interface) shown in FIG. 13A. The interface 1301 includes a picture 13011 and an entry 13012 to the intelligent recognition function. In response to a tap operation on the entry 13012 to the intelligent recognition function, the mobile phone recognizes the picture 13011 by using the intelligent recognition function, and can recognize a commodity 13013 (which may be considered as a specific first item entity). Based on this, the mobile phone may predict that the user may want to view a business address and purchase a commodity, and may determine that text entities matching the picture 13011 are an address and a website link (which may be considered as two specific first text entities). Therefore, after recognizing the picture 13011 by using the intelligent recognition function, the mobile phone may display an interface 1302 shown in FIG. 13A. The interface 1302 is a recognition result page. In the interface 1302, the mobile phone marks an item entity. For example, a commodity 13013 is marked with an item mark 13021. Moreover, in the interface 1302, the mobile phone further marks an address with a location icon 13022 (which may be considered as a specific first text mark), to help the user view a business address, and marks a two-dimensional barcode with a code scanning icon 13023 (which may be considered as another specific first text mark), to help the user scan a code to purchase a commodity.

It should be noted that the graphic code, such as a two-dimensional barcode, is essentially for implementing a page jump, and a function thereof is the same as that of a website link. Therefore, the mobile phone may also regard the graphic code as a special text entity, and the mobile phone may recognize the graphic code by using a text extraction function, an intelligent recognition function, or the like.

Further, the mobile phone may mark a text entity matching a current focus item entity. In addition, as a focus item entity is switched, a marked text entity is also changed accordingly. For example, after the focus item entity is switched from the first item entity to the third item entity, the mark is also switched from the first text entity to the second text entity. The mark of the second text entity may be referred to as the third text mark. For example, the current focus item entity is an item entity 3, and the mobile phone may mark a text entity matching the item entity 3 in a plurality of text entities. After the focus item entity is switched to an item entity 4, the mobile phone may switch to marking a text entity matching the item entity 4. In this way, as the focus item entity is switched, the mobile phone may dynamically adjust the marked text entity, so that the marked text entity always matches the focus item entity. For switching of the focus item entity, refer to the foregoing related description in "First, the intelligent recognition function is described". Details are not described herein again.

In this application, content of a mark (that is, the first text mark or the second text mark) of each category of text entities is not specifically limited.

In some embodiments, the mobile phone may mark a text entity with a category icon of the text entity. For example, a phone number is marked with a phone icon, a website is marked with a network icon, and an address is marked with a location icon. In this way, a category of a text entity may be clearly indicated by a mark.

In some other embodiments, the mobile phone may mark a text entity with a service icon of a service (which may be referred to as a first service) that is in services associated with the text entity and that has the highest interest of a user. Each category of text entities may be associated with one or more services. The phone number may be associated with a plurality of services such as making a call, adding to contacts, and copying a number. The website may be associated with various services such as accessing a website, adding a website to favorites, and sharing a website. An address may be associated with a plurality of services such as open-in-map, navigation, add-address-to-favorites, and address sharing. A graphic code may be associated a plurality of services such as graphic code recognition, add-graphic code-favorites, and graphic code sharing.

Specifically, the mobile phone or another device may analyze interest of a local user in a plurality of services. Interest of a user in a service is positively correlated with a quantity of times that the user uses the service. In a process of using the mobile phone by the user, a larger quantity of times of selecting a specific service indicates higher interest of the user in the service.

An example in which a service associated with an address includes a total of four services, open-in-map, navigation, add-address-to-favorites, and address sharing, is used.

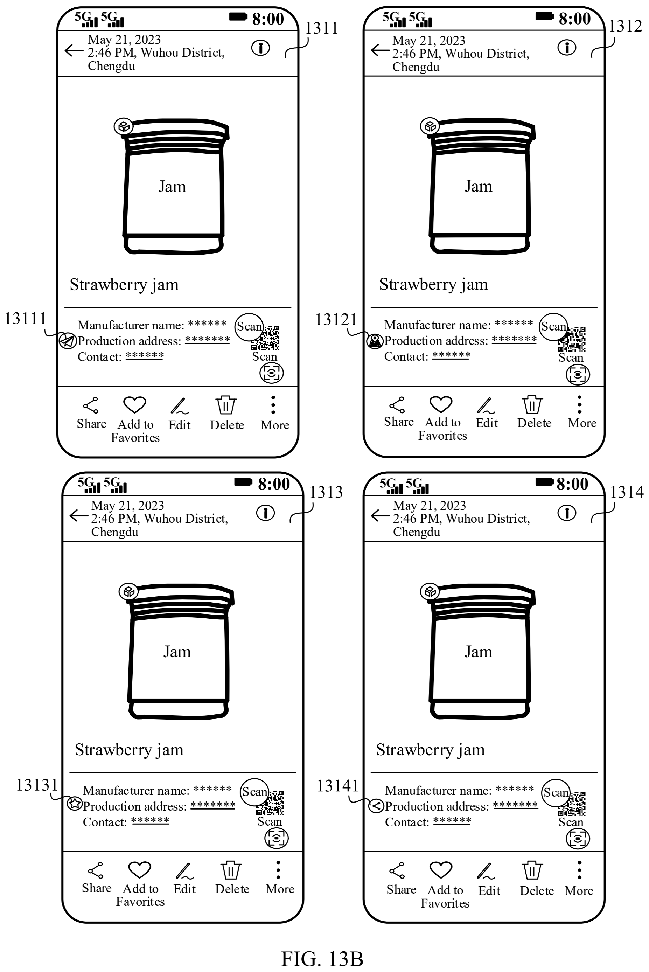

If a user has the highest interest in the navigation service, after recognizing the interface 1301 shown in FIG. 13A, the mobile phone may display an interface 1311 shown in FIG. 13B. In the interface 1311, an address is marked with a service icon 13111 of the navigation service.

If a user has the highest interest in the open-in-map service, after recognizing the interface 1301 shown in FIG. 13A, the mobile phone may display an interface 1312 shown in FIG. 13B. In the interface 1312, an address is marked with a service icon 13121 of the open-in-map service.

If a user has the highest interest in the add-address-to-favorites service, after recognizing the interface 1301 shown in FIG. 13A, the mobile phone may display an interface 1313 shown in FIG. 13B. In the interface 1313, an address is marked with a service icon 13131 of the add-address-to-favorites service.

If a user has the highest interest in the address sharing service, after recognizing the interface 1301 shown in FIG. 13A, the mobile phone may display an interface 1314 shown in FIG. 13B. In the interface 1314, an address is marked with a service icon 13141 of the address sharing service.

The mobile phone may further highlight a text entity in the recognition result. The mobile phone may highlight a text entity in a form such as highlighting, underlining, or projection. For example, in the interface 1102 and the interface 1302, an address, a phone number, and a website are all underlined and projected.

After the recognition result is obtained, in response to a trigger operation (which may also be referred to as a third trigger operation), such as a tap operation, performed by the user on the text entity or the mark of the text entity, the mobile phone may uncollapse a service option of a service associated with the text entity. For ease of description, an interface displaying a service option of a text entity may be referred to as a third interface.

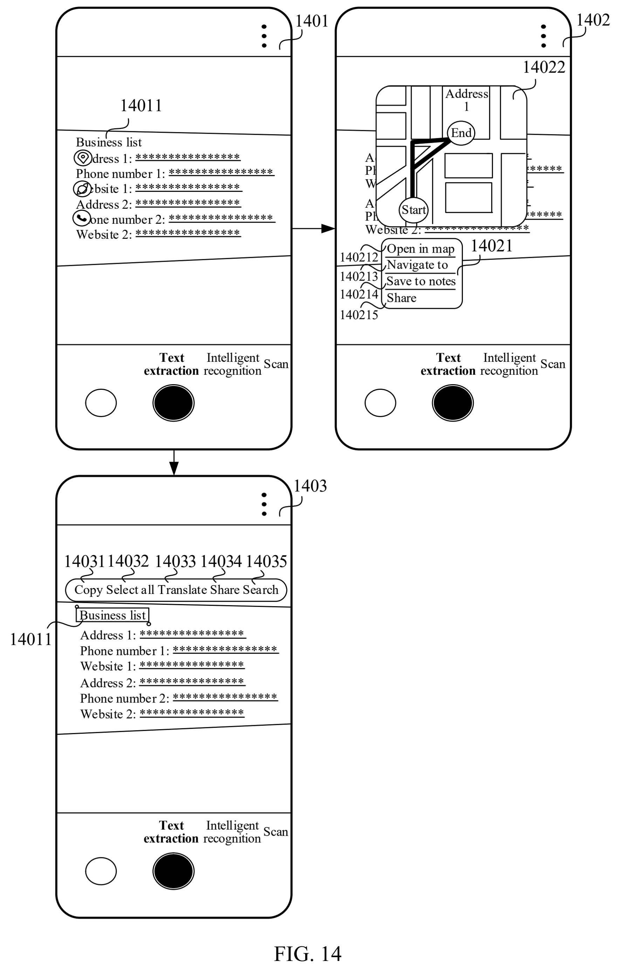

Using an example in which the recognition result page is an interface 1401 (which is the same as the interface 1102 in the foregoing text, and is not described herein) shown in FIG. 14, in response to a tap operation performed by the user on an address 1 in the interface 1401, the mobile phone may display an interface 1402 shown in FIG. 14. The interface 1402 includes a pop-up window 14021 and a pop-up window 14022. The pop-up window 14021 includes a service option "Open in map" 140212 for opening a service in the map, a service option "Navigate to" 140213 for a navigation service, a service option "Save to notes" 140214 for an add-address-to-favorites service, and a service option "Share" 140215 for an address sharing service. Moreover, the pop-up window 14022 includes a route to the address 1.

In this application, a display order of the service options is not specifically limited.

In some embodiments, a display order of the service options is always a fixed order. For example, in service options of a plurality of services associated with an address, a display order from front to back is always: a service option for an open-in-map service, a service option for a navigation service, a service option for an add-address-to-favorites service, and a service option for an address sharing service, as shown in the interface 1402 in FIG. 14.

In some other embodiments, a display order of the service options matches interest of a user in the services, so that a service option for a service having high interest of the user may be displayed in the front, to help the user quickly view and operate the service.

In a specific implementation, the mobile phone may display the service options in descending order by interest of the user in services.

In another specific implementation, the mobile phone may display, in a first place, a service option for a service having the highest interest of a user, and display service options of other services in a fixed order.

This implementation is combined with the foregoing embodiment of "marking a text entity with a service icon of a service having highest interest of a user". After a text entity is marked with a service icon of a service having highest interest of a user, in response to a trigger operation performed by the user on the text entity, the mobile phone may display, in a first place, a service option for the service indicated by the service icon, that is, the service option displayed in the first place matches the service icon marked for the text entity in the recognition result. In this way, the service option for the service having the highest interest of the user may be displayed in the first place.

In the foregoing description about displaying service options, the description is made mainly for the address 14011 with a mark. It should be noted that in practice, all text entities may be associated with one or more services, and not only a text entity with a mark is associated with one or more services.

For example, although an address 2 in the interface 1401 is not marked, the address 2 may also be associated with a plurality of services such as making a call, adding to contacts, and copying a number. In response to a tap operation performed by the user on the address 2, the mobile phone may also provide service options for services such as open-in-map, navigation, add-address-to-favorites, and address sharing.

For an unmarked text entity, a display order of service options may be always fixed, or may match interest of a user in services.

In the recognition result, in response to a trigger operation, such as a touch and hold operation, on a non-entity text, the mobile phone may select the text and provide a shortcut entry, to help perform a quick operation on the non-entity text. For the shortcut entry, refer to the foregoing descriptions. Details are not described herein again.

For example, in response to a touch and hold operation performed by the user on a text "Business list" 14011 in the interface 1401 shown in FIG. 14, the mobile phone may display an interface 1403 shown in FIG. 14. Different from the interface 1401, the text "Business list" 14011 in the interface 1403 is selected, and the interface 1403 includes a "Copy" entry 14031, a "Select all" entry 14032, a "Translate" entry 14033, a "Share" entry 14034, and a "Search" entry 14035.

At this point, it should be noted that in a process of performing an operation on a text entity and an item entity, the mobile phone may hide an entity mark in an interface. In this way, interference from a mark can be avoided. For example, in all of the interface 904, the interface 1001 to the interface 1004, and the interface 1402 to the interface 1403, entity marks are hidden.

Third, a translation function is described.

The mobile phone can translate a text in a current interface by using a translation function.

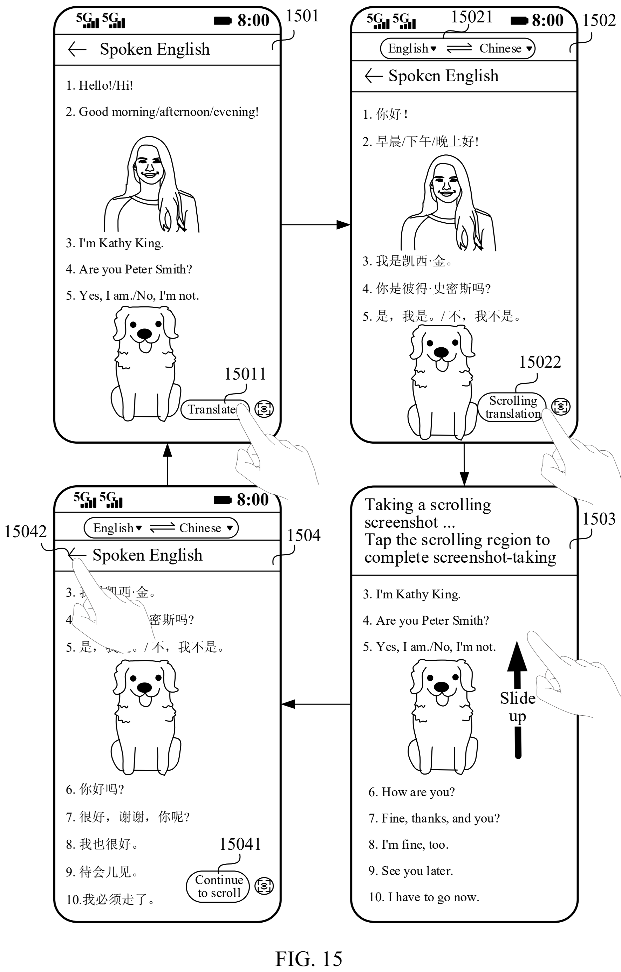

Using an example in which the translation function is recommended in the foregoing Manner 3 or Manner 4, after the translation function is recommended, the mobile phone may display an interface 1501 (which is the same as the interface 602 above, and is not described herein again) shown in FIG. 15. The interface 1501 includes "Translate" 15011. "Translate" 15011 is an entry to a translation function. In response to a tap operation performed by the user on "Translate" 15011, the mobile phone may display an interface 1502 shown in FIG. 15. The interface 1502 is a translation result page. The interface 1502 differs from the interface 1501 in that: texts in the interface 1502 are all in Chinese, that is, all foreign words are translated into Chinese.

Further, the translation result page further includes a language selection option for selecting languages of an original text and a translation. Using a translation result page shown in the interface 1502 in FIG. 15 as an example, the interface 1502 includes a language selection option 15021. In the language selection option 15021, an original text is selected on the left, and a translation is selected on the right.

After a translation result is obtained, the mobile phone may further display a scrolling translation control in a result page. In response to a trigger operation, such as a tap operation, performed by the user on the scrolling translation control, the mobile phone may display interface content in a scrolling manner and take a screenshot, that is, scrolling screenshot-taking. Subsequently, in response to an event of ending the scrolling screenshot-taking, the mobile phone may display a translation result of the scrolling screenshot-taking. The event of ending the scrolling screenshot-taking includes an even that scrolling duration reaches duration 2, an event that scrolling reaches a bottom, or an event that a tap operation performed by the user is received. Description is provided below by using a tap operation performed by the user as an example. In this way, after translating interface content currently displayed in a current interface, the mobile phone can continue conveniently translating interface content that is displayed in a scrolling manner.

Using a translation result page shown in the interface 1502 in FIG. 15 as an example, the interface 1502 further includes "Scrolling translation" 15022. "Scrolling translation" 15022 is a scrolling translation control. In response to a tap operation performed by the user on "Scrolling translation" 15022 in the interface, the mobile phone may display an interface 1503 shown in FIG. 15. Scrolling screenshot-taking is being performed on the interface 1503. For example, the interface content is scrolled from bottom to top as indicated by an arrow in the interface 1503. In response to a tap operation performed by the user in the interface 1503, the mobile phone may display an interface 1504 shown in FIG. 15. The interface 1504 is a translation result page of a screenshot taking result of the scrolling screenshot-taking.

After obtaining a translation result of content of the scrolling screenshot-taking, the mobile phone may further continue to provide a scrolling translation control, to continue scrolling screenshot-taking and perform translation. For example, the interface 1504 includes "Continue to scroll" 15041, and "Continue to scroll" 15041 is a scrolling translation control.

Further, after obtaining a translation result of the scrolling screenshot-taking, in response to a return operation performed by the user, the mobile phone may return to an interface of recommending a translation function. For example, in response to a tap operation performed by the user on a return control 15042 in the interface 1504 shown in FIG. 15, the mobile phone may return to the interface 1501 shown in FIG. 15. In this way, the mobile phone may return to an initial interface before translation quickly, to help the user perform an operation on the initial interface.

In some embodiments, the mobile phone may recognize whether a current interface is an interface that can be slid up and down. If the current interface is an interface that can be slid up and down, the mobile phone provides a scrolling translation control in the translation result page. If the current interface is not an interface that can be slid up and down, the mobile phone does not provide a scrolling translation control in the translation result page. A desktop, a lock screen interface, and a picture viewing interface are usually not interfaces that can be slid up and down. In this way, for different interfaces, after obtaining a translation result, the mobile phone may dynamically provide a scrolling translation control, thereby ensuring effectiveness of the displayed control.

After obtaining the translation result, in response to an original text-translation switching operation, for example, a tap operation on the current interface, the mobile phone can switch to an original text, to quickly switch from a translation result to the original text quickly. For example, in response to a tap operation performed by the user on the interface 1502 shown in FIG. 15, the mobile phone may switch Chinese (except for the language selection option) in the interface 1502 to English. In another example, in response to a tap operation performed by the user on the interface 1504 shown in FIG. 15, the mobile phone switches Chinese (except for the language selection option) in the interface 1504 to English.

The foregoing description about the translation function mainly describes implementation of unified translation of texts in a current interface by a mobile phone. In practice, after providing an entry to a translation function, the mobile phone may further translate some texts in the current interface.

Specifically, after providing a translation function, in response to a touch and hold operation performed by the user on an original text or a translation text, the mobile phone may select a text and provide a translation entry for the selected text. In response to a trigger operation, such as a tap operation, performed on the translation entry for the selected text, the mobile phone may display a translation result of the selected text. In this way, after providing an entry to a translation function, the mobile phone not only can translate the entire current interface, but also can translate a selected text.

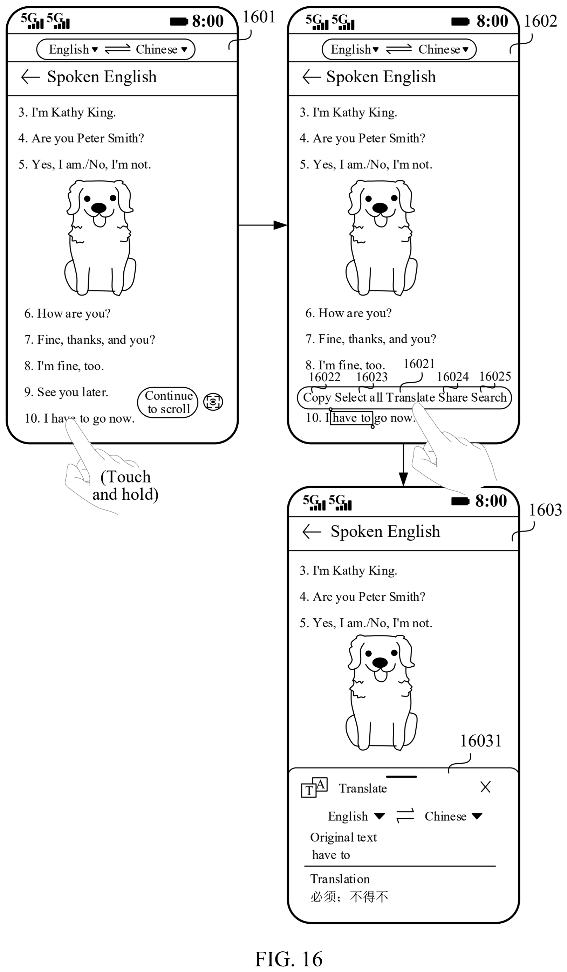

Using a translation result page shown in an interface 1601 in FIG. 16 as an example, in response to a touch and hold operation performed by the user on a text "have to" in the interface 1601 shown in FIG. 16, the mobile phone may display an interface 1602 shown in FIG. 16. Different from the interface 1601, the text "have to" in the interface 1602 is in a selected state (that is, "have to" is a selected text), and the interface 1602 includes "Translate" 16021. "Translate" 16021 is a translation entry for "have to". In response to a tap operation performed by the user on "Translate" 16021, the mobile phone may display an interface 1603 shown in FIG. 16. The interface 1603 includes a pop-up window 16031. The pop-up window 16031 includes a translation result of "have to".

In addition, while providing a translation entry for a selected text, the mobile phone may further provide shortcut entries, such as "Copy" 16022, "Select all" 16023, "Share" 16024, and "Search" 16025, in the interface 1601 shown in FIG. 16, for other text operations, to perform other quick processing on the selected text.

Fourth, the privacy protection function is described.

The mobile phone can block privacy information in a current interface by using a privacy protection function.

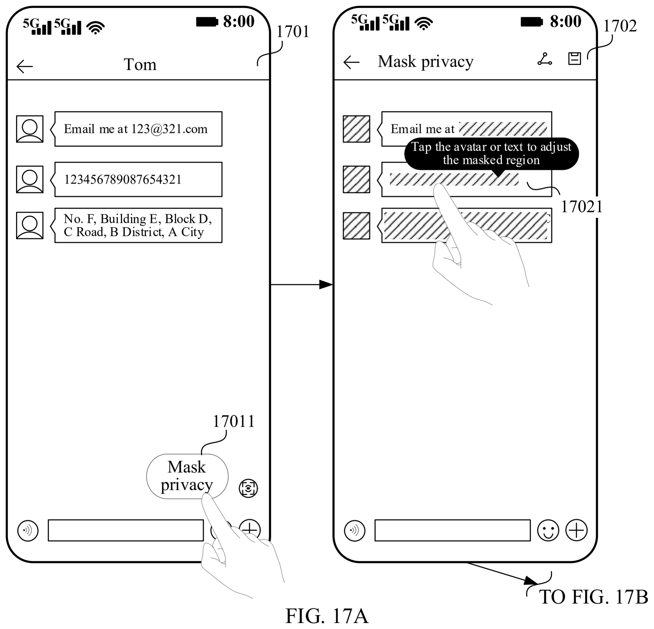

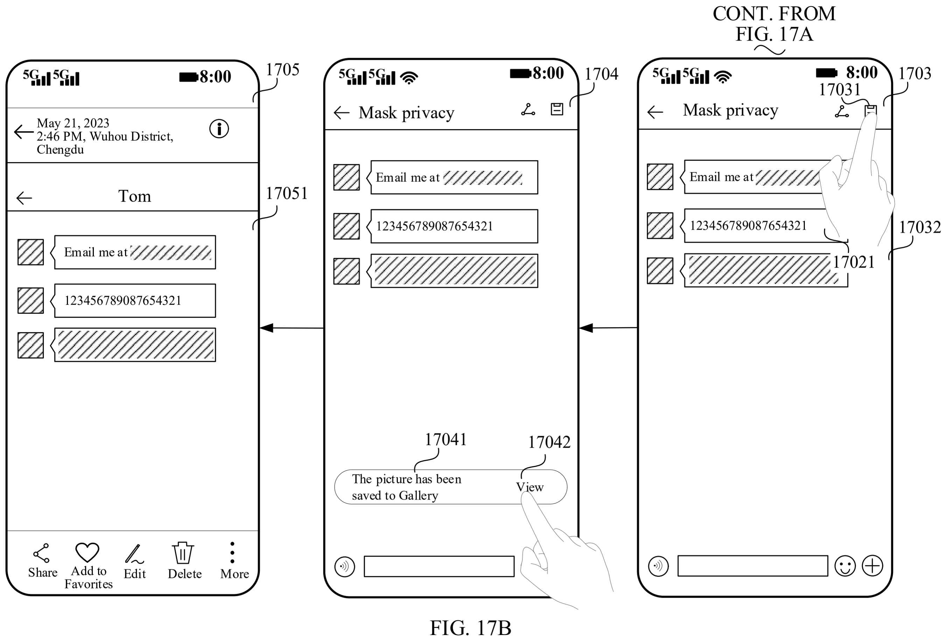

Using an example in which the privacy protection function is recommended in the foregoing Manner 3 or Manner 4, after the privacy protection function is recommended, the mobile phone may display an interface 1701 (which is the same as the interface 702 in the foregoing text, and is not described herein again) shown in FIG. 17. The interface 1701 includes "Mask privacy" 17011. "Mask privacy" 17011 is an entry to a privacy protection function. In response to a tap operation performed by the user on "Mask privacy" 17011, the mobile phone may display an interface 1702 shown in FIG. 17. Different from the interface 1701, an e-mail address, an identity card number, an identity card picture, an address, and an avatar in the interface 1702 are all masked. That is, privacy information is blocked.

After the privacy information is blocked, in response to a tap operation performed by the user on any blocked privacy information, the mobile phone may cancel blocking of the privacy information. In response to a tap operation performed by the user on the privacy information again, the mobile phone may block the privacy information again. In this way, the mobile phone can flexibly block or cancel blocking of the privacy information.

Using an interface 1702 shown in FIG. 17 as an example, an identity card number 17021 in the interface 1702 is blocked. In response to a tap operation performed by the user on the identity card number 17021 in the interface 1702, the mobile phone may display an interface 1703 shown in FIG. 17. Different from the interface 1702, the identity card number 17021 in the interface 1703 is not blocked. Subsequently, in response to a tap operation performed by the user on the identity card number 17021 in the interface 1703, the mobile phone may display the interface 1702 shown in FIG. 17 again, that is, restore blocking of the identity card number 17021.

After completing the privacy blocking, in response to a save operation performed by the user on a blocking effect, the mobile phone may further save the blocked picture to a gallery. For example, in response to a tap operation performed by the user on "Save" 17031 in the interface 1703 shown in FIG. 17, the mobile phone may save a picture 17032 displayed in the interface 1703.

Further, after the saving is completed, the mobile phone may provide a viewing entry to the picture. In response to a trigger operation, such as a tap operation, performed by the user on the viewing entry, the mobile phone may display the saved picture in the gallery. For example, after the saving is completed, the mobile phone displays an interface 1704 shown in FIG. 17. The interface 1704 includes prompts "The picture has been saved to Gallery" 17041 and "View" 17042. "View" 17042 is a viewing entry to the picture. In response to a tap operation performed by the user on "View" 17042, the mobile phone may display an interface 1705 shown in FIG. 17. The interface 1705 is an interface for viewing pictures in a gallery application. The interface 1705 includes a saved picture 17051, and privacy information in the picture 17051 is blocked.

That is, by using the privacy protection function, the user only needs to perform a trigger operation on an entry to the privacy protection function once and a save operation, to block privacy information in a current interface and take and save a screenshot, thereby improving efficiency of human-computer interaction.

Fifth, the selection function is described.

The mobile phone can conveniently process a text in a current interface by using a selection function.

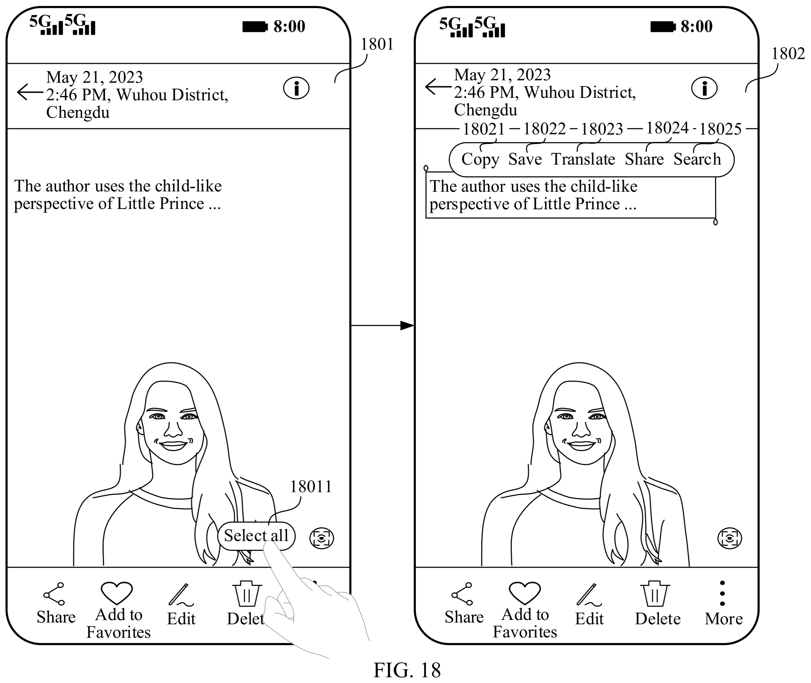

Using an example in which the selection function is recommended in the foregoing Manner 3 or Manner 4, after the selection function is recommended, the mobile phone may display an interface 1801 (which is the same as the interface 802 above, and is not described herein again) shown in FIG. 18. The interface 1801 includes "Select all" 18011. "Select all" 18011 is a control of the selection function. In response to a tap operation performed by the user on "Select all" 18011, the mobile phone may select all texts in a current interface, for example, an interface 1802 shown in FIG. 18 is displayed. Different from the interface 1802, texts in the interface 1802 are all selected.

Further, after all the texts are selected, in response to an operation of adjusting a selection box by the user, the mobile phone may adjust a range of a selected text, to perform flexible text selection. In addition, after selecting all the texts or adjusting the range of the selected text, the mobile phone may further provide shortcut entries, such as "Copy" 18021, "Add to favorites" 18022, "Select all" 18023, "Share" 18024, and "Search" 18025, in the interface 1802 shown in FIG. 18, for various text operations, to perform other quick processing on the selected text.

An embodiment of this application further provides an electronic device. The electronic device may include: a display screen, a memory and one or more processors (such as a CPU, a GPU, and an NPU). The display, the memory, and the processor are coupled. The memory is configured to store computer program code, and the computer program code includes computer instructions. When the processor executes the computer instructions, the electronic device may perform functions or steps performed by the device in the foregoing method embodiments.

An embodiment of this application further provides a chip system. The chip system includes at least one processor and at least one interface circuit. The processor and the interface circuit may be connected through a line. For example, the interface circuit may be configured to receive a signal from another apparatus (for example, a memory of an electronic device). For another example, the interface circuit may be configured to send a signal to another apparatus (for example, the processor). For example, the interface circuit may read instructions stored in the memory and send the instructions to the processor. When the instruction is executed by the processor, the electronic device is enabled to perform the steps in the foregoing embodiments. Certainly, the chip system may further include other discrete devices. This is not specifically limited in embodiments of this application.

An embodiment further provides a computer storage medium. The computer storage medium stores computer instructions. When the computer instructions are run on an electronic device, the electronic device is enabled to perform related methods and steps, to implement the picture processing methods in the foregoing embodiments.

An embodiment further provides a computer program product. When the computer program product runs on a computer, a computer is enabled to perform the related steps, to implement the image processing method in the foregoing embodiments.

In addition, embodiments of this application further provide an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the image processing method in the foregoing method embodiments.

The electronic device, the computer storage medium, the computer program product, or the chip provided in this embodiment is configured to perform the corresponding method provided above. Therefore, for beneficial effects that can be achieved, refer to the beneficial effects in the corresponding method provided above. Details are not described herein again.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate components may or may not be physically separate, and components displayed as units may be one or more physical units, may be located in one place, or may be distributed on a plurality of different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Finally, it should be noted that the foregoing embodiments are merely intended for describing the technical solutions of this application, but not intended to limit this application. Although this application is described in detail with reference to the example embodiments, a person of ordinary skill in the art should understand that the person can still make modifications or equivalent replacement to the technical solutions of this application without departing from the spirit and scope of the technical solutions of this application.

## Claims

1. A screen recognition method, applied to an electronic device, the method comprising:
displaying a first interface, wherein the first interface comprises a first item entity, a first text entity, and a second text entity;
in response to a first trigger operation on the first interface, adding a first text mark to the first text entity, and skipping adding a mark to the second text entity;
displaying a second interface, wherein the second interface comprises a second item entity, a third text entity, and a fourth text entity; and
in response to a second trigger operation on the second interface, adding a second text mark to the third text entity, and skipping adding a mark to the fourth text entity, wherein
entity categories of the first item entity and the second item entity are different, entity categories of the first text entity and the fourth text entity are the same, entity categories of the second text entity and the third text entity are the same, and the entity categories of the first text entity and the second text entity are different.

2. The method according to claim 1, wherein an entity category of a text entity comprises at least two of the following: an address, a phone number, flight information, an express number, an e-mail address, a website link, a certificate number for identity recognition, and a graphic code; and
an entity category of an item entity comprises at least two of the following: an animal, a plant, a building, and food.

3. The method according to claim 1 or 2, wherein the first text mark indicates the entity category of the first text entity; or
the first text entity is associated with a plurality of services, the plurality of services comprises a first service, the first text mark indicates the first service, the first service is a service selected most times by a user under a first category of text entities, and the first category is the entity category of the first text entity.

4. The method according to claim 3, wherein after the in response to a first trigger operation on the first interface, adding a first text mark to the first text entity, the method further comprises:
displaying a third interface in response to a third trigger operation on the first text entity or the first text mark, wherein the third interface comprises a plurality of service options, and the plurality of service options are in a one-to-one correspondence with the plurality of services; and displaying a service option of the first service in a first place among the plurality of service options.

5. The method according to any one of claims 1 to 4, wherein the first interface further comprises a fifth text entity; and
the method further comprises:
adding a third text mark to the fifth text entity in response to the first trigger operation on the first interface and that an entity category of the fifth text entity is different from the entity category of the first text entity, wherein
no mark is added to the fifth text entity if the entity categories of the fifth text entity and the first text entity are the same.

6. The method according to any one of claims 1 to 5, wherein the first interface further comprises a sixth text entity; and
the method further comprises:
adding a fourth text mark to the sixth text entity in response to the first trigger operation on the first interface and that the fourth entity mark of the sixth text entity does not block the first text mark, wherein
no mark is added to the sixth text entity if the fourth text mark blocks the first text mark.

7. The method according to any one of claims 1 to 6, wherein the first interface further comprises a third item entity; and
the method further comprises:
in response to the first trigger operation on the first interface, highlighting the first item entity, and displaying a first shortcut entry around the first item entity; and
in response to a fourth trigger operation on the third item entity, highlighting the third item entity, and displaying a second shortcut entry around the first item entity.

8. The method according to claim 7, wherein the in response to the first trigger operation on the first interface, highlighting the first item entity, and displaying a first shortcut entry around the first item entity comprises:
in response to the first trigger operation on the first interface and that the first item entity satisfies a first condition, highlighting the first item entity, and displaying the first shortcut entry around the first item entity, wherein
the first condition comprises at least one of the following: an area of the first item entity is larger than an area of the third item entity, a blocked region of the first item entity is smaller than a blocked region of the third item entity, and a definition of an edge line of the first item entity is higher than a definition of an edge line of the third item entity.

9. The method according to claim 7 or 8, wherein the method further comprises:
displaying a first item mark on the third item entity in response to the first trigger operation on the first interface, wherein
the fourth trigger operation comprises a trigger operation on the first item mark.

10. The method according to any one of claims 7 to 9, wherein the method further comprises:
adding the third text mark to the second text entity in response to the fourth trigger operation on the third item entity.

11. The method according to any one of claims 7 to 10, wherein the method further comprises:
displaying a fourth interface in response to a move operation on a highlighted item entity, wherein the fourth interface comprises a plurality of associated entries, each associated entry corresponds to one application or one service, the plurality of associated entries comprise a first associated entry, and the first associated entry corresponds to a first application or a second service; and
displaying, by the electronic device, a fifth interface in response to moving the highlighted item entity to the first associated entry, wherein the fifth interface is an interface of the first application or the second service, and the fifth interface comprises associated information of the highlighted item entity.

12. The method according to claim 11, wherein the displaying a fourth interface in response to a move operation on a highlighted item entity comprises:
moving a position of the highlighted item entity in the first interface in response to the move operation on the highlighted item entity; and
displaying the fourth interface in response to that the position of the highlighted item entity moves into a target region in the first interface.

13. The method according to claim 11 or 12, wherein
the highlighted item entity is the first item entity, and the plurality of associated entries comprise a second associated entry; and
the highlighted item entity is the third item entity, and the plurality of associated entries comprise a third associated entry, wherein
the second associated entry is different from the third associated entry.

14. The method according to any one of claims 1 to 13, wherein the first interface is a viewfinder interface of a camera, and the first trigger operation comprises a photographing operation.

15. The method according to any one of claims 1 to 13, wherein before the in response to a first trigger operation on the first interface, adding a first text mark to the first text entity, the method further comprises:
displaying a recognition control in the first interface when the first interface satisfies a second condition, wherein
the second condition comprises: the first interface is a non-blank interface, the first interface comprises a text entity and/or an item entity, and the first trigger operation comprises a trigger operation on the recognition control.

16. The method according to claim 15, wherein the displaying a recognition control in the first interface when the first interface satisfies a second condition comprises:
displaying, when the first interface satisfies the second condition, the recognition control in the first interface in response to a fifth trigger operation performed by the user on the first interface.

17. The method according to claim 16, wherein the method further comprises:
in response to the fifth trigger operation performed by the user on the first interface:
displaying a translation control in the first interface when a quantity of foreign words in the first interface exceeds a first quantity, wherein when the quantity of foreign words in the first interface does not exceed the first quantity, the translation control is not displayed, and the translation control is configured to trigger the electronic device to translate the foreign words in the first interface;
displaying a privacy protection control in the first interface when the first interface comprises privacy information, wherein when the first interface does not comprise privacy information, the privacy protection control is not displayed, and the privacy protection control is configured to trigger the electronic device to block the privacy information in the first interface; and
displaying a selection control in the first interface when the first interface comprises a text, but does not comprise an entity, wherein when the first interface does not comprise a text or comprises an entity, the selection control is not displayed, and the selection control is configured to trigger the electronic device to select a text in the first interface.

18. An electronic device, comprising: a display screen, one or more processors, and one or more memories, wherein the one or more processors are coupled to the display screen and the one or more memories; and the one or more memories are configured to store computer program code, the computer program code comprises computer instructions, and when the one or more processors execute the computer instructions, the electronic device is enabled to perform the method according to any one of claims 1 to 17.

19. A computer-readable storage medium, comprising instructions, wherein when the instructions are run on an electronic device, the electronic device is enabled to perform the method according to any one of claims 1 to 17.
